# EUROPÄISCHE PATENTSCHRIFT

(11) **EP 4 419 381 B1**
(45) Veröffentlichungstag und Bekanntmachung des Hinweises auf die Patenterteilung: **10.12.2025**
(21) Anmeldenummer: 22809646.7
(22) Anmeldetag: 19.10.2022
(51) Int. Cl.: B60N 2/07

(54) **SCHIENENABDECKUNG ZUM MINDESTENS TEILWEISEN ABDECKEN EINER FÜHRUNGSSCHIENE IN EINEM FAHRZEUGINNENRAUM UND MONTAGEVERFAHREN ZUR MONTAGE EINER SCHIENENBAUGRUPPE**
SLIDE COVER FOR AT LEAST PARTIAL COVERING AN ADJUSTER RAIL IN A VEHICLE INTERIOR SPACE AND MOUNTING MEHTOD FOR MOUNTING A RAIL ASSEMBLY
RECOUVREMENT DE GLISSIÈRE POUR AU MOINS PARTIELLEMENT COUVRIR UN RAIL DE GUIDAGE À L'INTÉRIEUR D'UN VÉHICULE ET MÉTHODE POUR MONTER UN ASSEMBLAGE DE RAIL

(30) Priorität: 21.10.2021 DE 102021211915
(43) Veröffentlichungstag der Anmeldung: 28.08.2024
(73) Patentinhaber: Brose Fahrzeugteile SE & Co. Kommanditgesellschaft, Coburg, 96450 Coburg (DE)
(72) Erfinder: KOSTIN, Sergej, 96450 Coburg (DE)
(74) Vertreter: Maikowski & Ninnemann Patentanwälte Partnerschaft mbB
(86) Internationale Anmeldenummer: PCT/EP2022/079031
(87) Internationale Veröffentlichungsnummer: WO 2023/066963

(56) Entgegenhaltungen:
- WO-A1-2021/187900
- DE-A1- 102012 108 988

## Beschreibung

Die vorgeschlagene Lösung betrifft unter anderem eine Schienenabdeckung zum mindestens teilweisen Abdecken einer Führungsschiene in einem Fahrzeuginnenraum gemäß dem Oberbegriff des Anspruchs 1.

Eine derartige Schienenabdeckung weist mindestens eine Mehrzahl entlang einer Längserstreckungsachse hintereinander angeordneter Schiebeglieder auf. Dabei ist jedes der Schiebeglieder zwischen einer Abdeckposition und mindestens einer Verstellposition verstellbar. Ferner ist mindestens eines der Schiebeglieder in der Abdeckposition zum Abdecken eines Teils der Führungsschiene vorgesehen und mindestens eines der Schiebeglieder gibt in der mindestens einen Verstellposition eine Öffnung frei.

Eine vergleichbare Schienenabdeckung ist in der WO 2021/187900 A1 beschrieben.

Gemäß einem weiteren Aspekt umfasst die vorgeschlagene Lösung auch eine als vormontierte Baueinheit ausgebildete Schienenabdeckung .

Ferner umfasst die vorgeschlagene Lösung auch ein Montageverfahren zur Montage einer Schienenbaugruppe.

Schienenabdeckungen und vormontierte Baueinheiten zum Abdecken von Führungsschienen sowie entsprechende Montageverfahren sind insbesondere aus dem Fahrzeugbau bekannt. Dabei werden derartige Mittel eingesetzt, um Führungsschienen, insbesondere solche an denen Innenraumkomponenten verstellbar gelagert sind, mindestens teilweise abzudecken und so vor Schmutz und schädlichen Einflüssen zu schützen. Weiterhin kann ein Abdecken einer Führungsschiene eine Gefahr eines Einklemmens von Gegenständen oder Körperteilen im Zuge einer Verstellung einer an der Führungsschiene verstellbar gelagerten Innenraumkomponente reduzieren.

In einem Fahrzeuginnenraum angeordnete Schienenabdeckungen oder Baueinheiten zum Abdecken von Führungsschiene können dabei in Gebrauchssituationen belastenden Einflüssen ausgesetzt sein. Insbesondere wenn die Schienenabdeckung oder die Baueinheit im Bereich eines Fahrzeugbodens angeordnet ist, bewegen sich regelmäßig Fahrzeugbenutzer darauf. Hierbei kann die Schienenabdeckung oder die Baueinheit mit Schuhen unterschiedlich grober Profile und Verschmutzungsgrade belastet werden.

Um eine Verstellbarkeit einer an der Führungsschiene gelagerten Innenraumkomponente trotz Abdeckung der Führungsschiene mit einer Schienenabdeckung oder einer vormontierten Baueinheit zum Abdecken einer Führungsschiene zu ermöglichen, können Teile der Schienenabdeckung oder der Baueinheit bei einem Verstellen der Innenraumkomponente entlang der Führungsschiene aus einer Abdeckposition verdrängbar sein.

Hierzu offenbart die DE 10 2012 108 988 A1 eine flexible Sitzschienenabdeckung für eine Sitzschiene. Die Schienenabdeckung weist demnach ein Trägerelement und mehrere flächig ausgeführte, in einer ersten Abdecktelementereihe nebeneinander angeordnete Abdeckelemente auf. Jedes Abdeckelement ist ausgeführt, von einem geöffneten Zustand, in welchen das Abdeckelement zu mindestens teilweise in das Trägerelement eingeschoben ist, in einen geschlossenen Zustand, in welchen das Abdeckelement zu mindestens teilweise aus dem Trägerelement herausgeschoben ist, bewegt zu werden.

Grundsätzlich können Schienenabdeckungen oder Baueinheiten zum Abdecken von Führungsschienen auch aus belastbaren Materialien fertigbar sein, um externen Einflüssen langfristig widerstehen zu können. Dies kann sich jedoch negativ auf eine Verstellbarkeit einer an der Führungsschiene gelagerten Innenraumkomponente auswirken.

Durch die teilweise Abdeckung der Führungsschiene kann eine Erreichbarkeit von Befestigungsmitteln, mit denen die Führungsschiene in dem Fahrzeuginnenraum befestigbar ist, erschwert werden. Hierdurch können Schienenabdeckungen und Baueinheiten der vorgenannten Art eine Montage und/oder eine Wartung einer Führungsschiene und einer daran gelagerten Innenraumkomponente erschweren.

Es besteht daher ein Bedarf Schienenabdeckungen und vormontierte Baueinheiten, zum mindestens teilweisen Abdecken von Führungsschiene, sowie Montageverfahren zur Montage einer Schienenbaugruppe hinsichtlich der Nachteile im Stand der Technik zu verbessern.

Diese Aufgabe wird durch eine Schienenabdeckung mit den Merkmalen des Anspruchs 1 sowie eine als vormontierte Baueinheit ausgebildete Schienenabdeckung mit den Merkmalen des Anspruchs 13 und einem Montageverfahren mit den Merkmalen des Anspruchs 14 gelöst.

Eine Schienenabdeckung, zum mindestens teilweisen Abdecken einer Führungsschiene in einem Fahrzeugraum, weist dabei gemäß Anspruch 1 mindestens auf:
- eine Mehrzahl entlang einer Längserstreckungsachse hintereinander angeordneter Schiebeglieder, wobei
   - jedes der Schiebeglieder zwischen einer Abdeckposition und mindestens einer Verstellposition verstellbar ist,
   - die Schiebeglieder jeweils in ihre Abdeckposition vorgespannt sind,
   - mindestens eines der Schiebeglieder in der Abdeckposition zum Abdecken eines Teils der Führungsschiene vorgesehen ist, und
   - mindestens eines der Schiebeglieder in der mindestens einen Verstellposition eine Öffnung freigibt, wobei
die Schienenabdeckung mindestens ein Kopplungselement aufweist, das mindestens zwei der Schiebeglieder verbindet und über das bei einem Verstellen eines der Schiebeglieder von der Abdeckposition in die Verstellposition eine Verstellkraft in wenigstens ein weiteres Schiebeglied einleitbar ist, über die das wenigstens eine weitere Schiebeglied in Richtung seiner Verstellposition verstellt wird.

Demnach ist das Kopplungselement der vorgeschlagenen Schienenabdeckung ausgebildet und vorgesehen, die Verstellkraft an das wenigstens eine weitere Schiebeglied zu übertragen. Hierdurch kann die Verstellkraft von einem der Schiebeglieder auf das wenigstens eine weitere Schiebeglied übertragen werden. Das Einleiten der Verstellkraft in eines der Schiebeglieder kann somit ein Verstellen mindestens zweier Schiebeglieder bewirken. Die mindestens zwei derart aus der Abdeckposition verstellten Schiebeglieder können in einem bestimmungsgemäß an einer Führungsschiene montierten Zustand der Schienenabdeckung eine Öffnung definieren, welche einen Abschnitt der Führungsschiene freigibt.

In dem bestimmungsgemäß montierten Zustand kann sich ein an der Führungsschiene verstellbar gelagerter Schlitten durch die Öffnung erstrecken und die Verstellkraft durch Anliegen an wenigstens einem der Schiebeglieder in das wenigstens eine Schiebeglied einleiten. Bei einem Verstellen des Schlittens entlang der Führungsschiene ist das wenigstens eine weitere Schiebeglied über das Kopplungselement bereits aus der Abdeckposition verstellt, bevor der Schlitten an dem wenigstens einen weiteren Schiebeglied anliegt. Hierdurch kann eine Verstellbarkeit des Schlittens verbessert werden.

Durch das Verstellen des Schlittens entlang der Führungsschiene kann die Verstellkraft in verschiedene Schiebeglieder einleitbar sein. Somit können bei dem Verstellen des Schlittens die Schiebeglieder aus der Abdeckposition verdrängbar sein.

Mindestens ein Teil der Führungsschiene kann in dem bestimmungsgemäß montierten Zustand der Schienenabdeckung durch Schiebeglieder in der Abdeckposition abgedeckt sein. Die Schiebeglieder in der Abdeckposition können somit die Führungsschiene vor einem Eindringen von Verunreinigungen, wie Steinen, Sand oder Textilien, schützen. Weiterhin können die Schiebeglieder in der Abdeckposition ein Eindringen von Objekten, die ein Verklemmen der Führungsschiene bewirken können, verhindern. Insbesondere können die Schiebeglieder in der Abdeckposition ein Verklemmen von Körperteilen in der Führungsschiene bei einem Verstellen einer verstellbar an der Führungsschiene gelagerten Innenraumkomponente verhindern.

Durch die Ausbildung der Schienenabdeckung mit einer Mehrzahl von Schiebegliedern kann die Öffnung ohne Verformung der Schiebeglieder freigebbar sein. Insbesondere können die Schiebeglieder demnach aus einem dauerhaften und/oder unelastischen Material herstellbar sein. Dies kann einen Schutz der Führungsschiene und eine Widerstandsfähigkeit der Schienenabdeckung gegenüber externen Einflüssen verbessern. Insbesondere kann eine Trittfestigkeit und Lebensdauer der Schienenabdeckung verbesserbar sein.

In einer Ausgestaltung der vorgeschlagenen Lösung können die Schiebeglieder jeweils flächig ausgebildet sein. Dies kann eine Anzahl von benötigten Schiebegliedern reduzieren. Hierdurch kann ein Fertigungsaufwand reduzierbar sein.

Alternativ oder ergänzend können die Schiebeglieder mit Stiften oder kugelförmigen Volumenkörpern ausgebildet sein. Dies kann eine Anpassung einer Ausdehnung der von den verstellten Schiebegliedern in der mindestens einen Verstellposition definierten Öffnung an verschiedene Ausführungsformen einer Führungsschiene ermöglichen.

In einer alternativen oder ergänzenden Ausgestaltung der vorgeschlagenen Schienenabdeckung kann das Kopplungselement alle hintereinander angeordneten Schiebeglieder miteinander verbinden. Dies kann eine Anzahl der Kopplungselemente reduzieren. Insbesondere können hierdurch Fertigungskosten reduzierbar sein.

In einer weiteren Ausgestaltung der vorgeschlagenen Lösung kann das mindestens eine Kopplungselement mit mindestens einem Feststoffgelenk ausgebildet sein. Das mindestens eine Feststoffgelenk kann jeweils zwei der Schiebeglieder derart miteinander verbinden, dass die in das eine der beiden Schiebeglieder eingeleitete Verstellkraft auf das jeweils andere übertragen wird. Dies kann die Fertigungskosten für die Schienenabdeckung weiter reduzieren.

Exemplarisch kann das mindestens eine Kopplungselementen mit einer Mehrzahl von Feststoffgelenken ausgebildet sein, wobei jedes der Feststoffgelenke jeweils zwei der hintereinander angeordneten Schiebeglieder miteinander koppelt.

Alternativ oder ergänzend können das Kopplungselement und die durch das Kopplungselement verbundenen Schiebeglieder einteilig, insbesondere monolithisch, ausgebildet sein. Das Kopplungselement und die durch das Kopplungselement verbundenen Schiebeglieder können aus demselben Werkstoff bestehen. Hierdurch können zueinander verschiebbare miteinander gekoppelte Schiebeglieder kostengünstig herstellbar sein.

Insbesondere kann die einstückige Ausführungsform des Kopplungselements mit den damit verbundenen Schiebegliedern in einem Spritzgussverfahren herstellbar sein. Weiter insbesondere kann die einstückige Ausführungsform des Kopplungselements mit den damit verbundenen Schiebeglieder aus einem Kunststoff herstellbar sein.

Grundsätzlich ist jedoch auch eine Fertigung des mindestens einen Feststoffgelenks und der Schiebeglieder aus unterschiedlichen Materialien denkbar und möglich. Dies kann eine Fertigung der Feststoffgelenke aus einem gegenüber dem Material der Schiebeglieder elastischeren Werkstoff ermöglichen. Mithin kann die Verstellbarkeit der Schiebeglieder zwischen der mindestens ein Verstellposition und der Abdeckposition verbesserbar sein.

In einer möglichen Ausgestaltung kann das mindestens eine Kopplungselement jeweils über einen Befestigungsabschnitt des jeweiligen Schiebegliedes mit dem jeweiligen Schiebeglied verbunden sein. Die Befestigungsabschnitte aller mit dem mindestens einen Kopplungselement verbundenen Schiebeglieder können parallel zu der Längserstreckungsachse angeordnet sein. Dies kann einen Raumbedarf für das mindestens eine Kopplungselement reduzieren.

In einer weiteren Ausgestaltung der vorgeschlagenen Lösung kann das Kopplungselement mit einem Seil ausgebildet sein. Hierdurch können die Schiebeglieder platzsparend und effektiv miteinander koppelbar sein. Dies kann den Fertigungsaufwand weiter reduzieren.

Insbesondere kann das Seil dehnbar ausgebildet sein. Hierdurch kann eine sukzessiv abnehmende Weiterleitung eines übertragenen Anteils der Verstellkraft zwischen benachbarten und gekoppelten Schiebeglieder möglich sein. Dies kann das Verstellen miteinander gekoppelter Schiebeglieder um unterschiedliche Verstelllängen ermöglichen.

In einer weiteren Ausgestaltung der vorgeschlagenen Lösung kann die Schienenabdeckung eine Mehrzahl von Kopplungselementen aufweisen, wobei jeweils ein Kopplungselement mindestens zwei Schiebeglieder miteinander verbindet. Dies kann eine modulare Fertigung der Schienenabdeckung ermöglichen.

In einer weiteren alternativen oder ergänzenden Ausgestaltung der vorgeschlagenen Schienenabdeckung können die Schiebeglieder eingerichtet sein, bei dem Verstellen zwischen der Abdeckposition und der mindestens eine Verstellposition relativ zu der Längserstreckungsachse zu verkippen. Dies kann im bestimmungsgemäß montierten Zustand der Schienenabdeckung die Verstellbarkeit eines an der Führungsschiene verstellbar gelagerten Schlittens weiter verbessern.

Bei dem Verkippen kann eine Längsachse des verkippten Schiebegliedes mit der Längserstreckungsachse der Schienenabdeckung einen Kippwinkel einschließen. Der Kippwinkel kann in der Abdeckposition 0° betragen. Ebenso kann der Kippwinkel in einer vollständig verstellten Verstellposition 0° betragen. Der Kippwinkel kann in einer zwischen der Abdeckposition und der vollständig verstellten Verstellposition eingenommenen Verstellposition ungleich 0° sein. Insbesondere kann der Kippwinkel somit beim Verstellen von der Abdeckposition in die vollständig verstellte Verstellposition zwischen 0° und einem Maximalwert liegen. Der Maximalwert kann zwischen 10° und 70°, insbesondere zwischen 20° und 60°, weiter, insbesondere zwischen 30° und 50° liegen.

Der Maximalwert kann durch eine Elastizität des mindestens einen Kopplungselementes einstellbar sein. Hierdurch kann eine Größe der von den Schiebegliedern definierten Öffnung an verschiedene Ausführungsformen von Führungsschienen anpassbar sein.

In einer weiteren oder alternativen Ausgestaltung der vorgeschlagenen Schienenabdeckung kann eine Verstellbewegung, mit der die Schiebeglieder zwischen der Abdeckposition und der mindestens ein Verstellposition verstellbar sind, eine Richtungskomponente senkrecht zu der Längserstreckungsachse aufweisen. Hierdurch kann in der bestimmungsgemäß an einer Führungsschiene montierten Anordnung ein Freigeben der Öffnung für einen an der Führungsschiene verstellbar gelagerten Schlitten verbesserbar sein.

Die Verstellbewegung kann insbesondere eine Überlagerung eines Verkippens und eines Verstellens entlang der senkrechten Richtungskomponente umfassen. Demnach können die Schiebeglieder derart gelagert sein, dass unter einer an mindestens einem der Schiebeglieder anliegenden Verstellkraft das mindestens eine Schiebeglied und mindestens ein weiteres, mit dem mindestens ein Schiebeglied gekoppelte Schiebeglied, mit der vorgenannten Verstellbewegung zwischen der Abdeckposition und der mindestens einen Verstellposition verstellbar sind.

Die Schiebeglieder können insbesondere in einer Verstellebene verstellbar sein. Die Verstellebene kann durch die Längserstreckungsachse der Schienenabdeckung und die senkrechte Richtungskomponente der Verstellbewegung aufgespannt werden. Demnach können die senkrechten Richtungskomponenten aller Schiebeglieder parallel zueinander verlaufen. Dies kann einen notwendigen Verstellweg zur Freigabe der Öffnung reduzieren.

Gemäß der vorgeschlagenen Schienenabdeckung sind die Schiebeglieder jeweils in ihre Abdeckposition vorgespannt. Dies kann in dem bestimmungsgemäß montierten Zustand der Schienenabdeckung das mindestens teilweise Abdecken der Führungsschiene verbessern.

Durch eine Vorspannung können die Schiebeglieder insbesondere selbstständig aus der mindestens einen Verstellposition in die Abdeckposition zurückkehren, sobald eine eingeleitete Verstellkraft betragsmäßig unter einen Schwellwert reduziert wird oder wegfällt. Hierdurch kann im bestimmungsgemäß montierten Zustand ein selbstständiges Abdecken solcher Abschnitte der Führungsschiene erfolgen, die zu einem an der Führungsschiene gelagerten Schlitten beabstandet sind.

In einer weiteren Ausgestaltung der vorgeschlagenen Lösung kann die Schienenabdeckung zum Vorspannen der Schiebeglieder ein Federsystem aufweisen. Demnach kann die Vorspannung über mindestens eine Feder auf die Schiebeglieder aufgebracht werden. Eine Feder kann dabei durch jedes Element realisierbar sein, welches eingerichtet ist, durch eine in das Element eingeleitete Kraft verformt zu werden und eine der eingeleiteten Kraft entgegengesetzte rücktreibende Kraft zu bewirken.

In einer weiteren Ausgestaltung kann das Federsystem mit mindestens einer Blattfeder ausgebildet sein. Hierdurch kann eine Verformbarkeit des Federsystems richtungsabhängig ausgestaltbar sein. Dies kann eine Anpassbarkeit der Schienenabdeckung an spezielle Ausführungsformen von Führungsschienen verbessern.

In einer alternativen oder ergänzenden Ausgestaltung können mindestens zwei der Schiebeglieder über eine Vorspannkraft in ihre jeweilige Abdeckposition vorgespannt sein, wobei die Vorspannkraft von einer wellenförmigen Blattfeder der Schienenabdeckung aufgebracht werden kann. Dies kann eine Anzahl benötigter Blattfedern reduzieren und so Fertigungskosten senken.

Die wellenförmige Blattfeder kann in einer Projektion auf die Verstellebene der Schiebeglieder sinus- oder weitestgehend sägezahnförmig verlaufen. Demnach kann die wellenförmige Blattfeder eine alternierende Beabstandung zu den Schiebegliedern aufweisen.

In einer weiteren Ausgestaltung der vorgeschlagenen Lösung kann die Schienenabdeckung, zum Verteilen der durch die wellenförmige Blattfeder aufgebrachten Vorspannkraft auf die mindestens zwei Schiebeglieder, eine Kraftverteilungs-Blattfeder aufweisen. Dies kann ein gleichmäßiges Vorspannen der mindestens zwei Schiebeglieder ermöglichen. Insbesondere kann dies ein gleichmäßiges Vorspannen der mindestens zwei Schiebeglieder mit einer reduzierten Anzahl von Federn ermöglichen.

In einer weiteren Ausgestaltung kann die Kraftverteilungs-Blattfeder eingerichtet sein, die Vorspannkraft in alle hintereinander angeordneten Schiebeglieder einzuleiten. Dies kann die Anzahl der benötigten Federn weiter reduzieren.

In einer exemplarischen Ausgestaltung kann die Kraftverteilungs-Blattfeder an den Schiebegliedern anliegen.

In einer Ausgestaltung der vorgeschlagenen Lösung kann die Kraftverteilungs-Blattfeder an einem dem Befestigungsabschnitt gegenüberliegenden Stützabschnitt des jeweiligen Schiebeglieds anliegen. Insbesondere können die Stützabschnitte der Schiebeglieder parallel zu der Längserstreckungsachse angeordnet sein. Dies kann einen Materialaufwand für das Federsystem weiter reduzieren.

In einer weiteren Ausgestaltung der vorgeschlagenen Lösung kann sich die wellenförmige Blattfeder an einem Bauteil, relativ zu dem Schiebeglieder verstellbar sind, und der Kraftverteilungs-Blattfeder abstützen. Hierdurch kann die Kraftverteilungs-Blattfeder von der wellenförmigen Blattfeder mit der Vorspannkraft beaufschlagbar sein.

Die Kraftverteilungs-Blattfeder kann die Vorspannkraft in die Schiebeglieder einleiten. Insbesondere können hierdurch alle hintereinander angeordneten Schiebeglieder gleichmäßig mit genau einer wellenförmigen Blattfeder und einer Kraftverteilungs-Blattfeder vorspannbar sein. Dies kann ein gleichmäßiges Vorspannen bei geringen Fertigungskosten ermöglichen.

In einer weiteren Ausgestaltung der vorgeschlagenen Lösung kann die Kraftverteilungs-Blattfeder einen Vorsprung zum Stabilisieren einer Lage der Kraftverteilungs-Blattfeder relativ zu dem Bauteil, zudem die Schiebeglieder verstellbar sind, aufweisen. Dies kann eine Beeinträchtigung der Schienenabdeckung durch eine sich verdrehende oder verrutschende Kraftverteilungs-Blattfeder unwahrscheinlicher machen.

Der Vorsprung kann sich in der Verstellebene der Schiebeglieder erstrecken. Dabei kann der Vorsprung eine Ausdehnung in der Verstellebene und orthogonal zu der Längserstreckungsachse aufweisen. Diese Ausdehnung kann eine Breite des Vorsprungs definieren. Weiterhin kann der Vorsprung durch eine Materialhöhe der Blattfeder orthogonal zu der Verstellebene charakterisiert sein. Diese Materialhöhe kann eine Höhe des Vorsprungs definieren.

In einer Ausgestaltung der vorgeschlagenen Lösung kann die Höhe des Vorsprungs kleiner als die Breite des Vorsprungs sein. Dies kann die Wahrscheinlichkeit eines Verdrehens der Kraftverteilungs-Blattfeder weiter reduzieren.

In einer weiteren Ausgestaltung der vorgeschlagenen Lösung kann der Vorsprung entlang einer Kulisse in dem Bauteil, relativ zu dem die Schiebeglieder verstellbar sind, führbar sein. Dies kann ein Verrutschen der Kraftverteilungs-Blatt relativ zu dem genannten Bauteil verhindern. Insbesondere können sich derartige Kulissen orthogonal zu der Längserstreckungsachse der Schienenabdeckung erstrecken.

In einer weiteren Ausgestaltung der vorgeschlagenen Lösung kann mindestens eines der Schiebeglieder einen Sicherungsvorsprung aufweisen. Der Sicherungsvorsprung kann ein Verstellen des mindestens einen Schiebegliedes relativ zu einem Bauteil, relativ zu dem die Schiebeglieder verstellbar sind, begrenzen. Hierdurch kann eine Verliersicherung für das mindestens eine Schiebeglied und mit dem mindestens einen Schiebeglied gekoppelte Schiebeglieder realisierbar sein.

Exemplarisch kann eine Verstellbarkeit des mindestens einen Schiebegliedes mit dem Sicherungsvorsprung von der mindestens einen Verstellposition in Richtung der Abdeckposition über die Abdeckposition hinaus begrenzt sein. Dies kann die Verstellbarkeit des mindestens einen Schiebegliedes entgegen der Verstellbewegung in der Abdeckposition auch bei nicht verschwindender Vorspannkraft verhindern. Exemplarisch kann das mindestens eine Schiebeglied in der Abdeckposition mit einem Abschnitt an dem Bauteil, relativ zu dem die Schiebeglieder verstellbar sind, anliegen.

In einer Ausgestaltung der vorgeschlagenen Lösung kann der Sicherungsvorsprung in der Abdeckposition formschlüssig an dem Bauteil anliegen.

In einer weiteren Ausgestaltung der vorgeschlagenen Lösung kann die Schienenabdeckung mehrere Reihen von jeweils entlang einer Längserstreckungsachse hintereinander angeordneten Schiebegliedern aufweisen. Dies kann eine modulare Fertigung und Montage der Schienenabdeckung ermöglichen und/oder verbessern.

In einer Ausgestaltung der vorgeschlagenen Lösung kann jede der mehreren Reihen jeweils mit genau einem Kopplungselement ausgebildet sein. Das Kopplungselement kann alle Schiebeglieder der jeweiligen Reihe miteinander koppeln.

In einer weiteren Ausgestaltung der vorgeschlagenen Lösung können zwei der mehreren Reihen hintereinander angeordnet sein. Exemplarisch kann die Längserstreckungsachse einer der zwei hintereinander angeordneten Reihen in einer Verlängerung der Längserstreckungsachse der anderen der zwei Reihen verlaufen. Hierdurch kann eine entlang der Längserstreckungsachse ausgedehnte Schienenabdeckung modular durch mehrere Reihen aneinandersetzbar sein. Dies kann eine Montage der Schienenabdeckung an einer Führungsschiene vereinfachen. Darüber hinaus kann eine Verwendbarkeit der Schienenabdeckung für Führungsschienen unterschiedlicher Ausdehnung entlang der Längserstreckungsachse verbessert werden.

In einer alternativen oder ergänzenden Ausgestaltung der vorgeschlagenen Lösung können zwei der mehreren Reihen jeweils entlang der Längserstreckungsachse verlaufend einander gegenüberliegend angeordnet sein. Dies kann eine Montage der vorgeschlagenen Schienenabdeckung beidseitig von einem an einer Führungsschiene verstellbar gelagerten Schlitten ermöglichen.

Exemplarisch können die zwei der mehreren Reihen jeweils mit einer Längserstreckungsachse parallel zueinander und parallel zu der Längserstreckungsachse der Schienenabdeckung angeordnet sein.

In einer weiteren Ausgestaltung der vorgeschlagenen Lösung kann die Schienenabdeckung ein Gehäuse aufweisen, an dem die Schiebeglieder verstellbar gelagert sind. Hierdurch können das Federsystem und ein Bereich der Lagerung der Schiebeglieder gegenüber externen Einflüssen abschirmbar sein. Dies kann die Lebensdauer der Schienenabdeckung verbessern.

In einer Ausgestaltung kann das Gehäuse das vorgenannte Bauteil sein, relativ zu dem die Schiebeglieder gelagert sind. Hierdurch kann die vorgeschlagene Schienenabdeckung an dem Gehäuse vormontierbar und vor einer bestimmungsgemäßen Montage in dem Fahrzeuginnenraum auf eine bestimmungsgemäße Funktion überprüfbar sein.

In einer weiteren Ausgestaltung der vorgeschlagenen Lösung kann das Gehäuse mit mehreren Gehäuseteilen ausgebildet sein, an denen jeweils eine der mehreren Reihen gelagert ist. Dies kann eine Montierbarkeit der Schienenabdeckung verbessern.

In einer Ausgestaltung können die senkrechten Komponenten der Verstellbewegungen zweier Schiebeglieder an mindestens zwei der mehreren Reihen jeweils entgegengesetzt verlaufen. Dies kann eine Freigabe der Öffnung in dem bestimmungsgemäß montierten Zustand verbessern. Insbesondere kann eine maximale Ausdehnung der Öffnung orthogonal zu der Längserstreckungsachse vergrößerbar sein. Dies kann den Einsatz der Schienenabdeckung an Führungsschienen mit Schlitten entsprechender Breite ermöglichen.

Die beiden derart gegenüber an mindestens zwei Gehäuseteilen montierten Reihen können einen Schlitz definieren, der von Schiebeglieder in der Abdeckposition verschließbar und von Schiebegliedern in der mindestens einen Verstellposition freigebbar ist.

In einer weiteren alternativen oder ergänzenden Ausgestaltung der vorgeschlagenen Lösung können die Schiebeglieder einer der zwei Reihen den Schiebegliedern einer anderen der zwei Reihen jeweils mit ihren Befestigungsabschnitten zugewandt angeordnet sein. Dies kann eine Kopplung benachbarter Schiebeglieder verbessern.

Insbesondere kann die Schienenabdeckung werkzeuglos in dem Fahrzeuginnenraum montierbar sein. Dies kann einen Montageaufwand reduzieren.

Die eingangs genannte Aufgabe wird auch von einer Schienenbaugruppe gelöst, die mindestens eine Führungsschiene, zum Lagern einer Innenraumkomponente in einem Fahrzeuginnenraum, mit einem an der Führungsschiene verstellbar gelagerten Schlitten und eine auf die Führungsschiene abgestimmte Schienenabdeckung gemäß der vorgeschlagenen Lösung aufweist.

Dabei kann sich der Schlitten durch die Öffnung der Schienenabdeckung erstrecken. Demnach kann die Schienenabdeckung den nicht von dem Schlitten an der Führungsschiene eingenommenen Abschnitt im Wesentlichen abdecken. Durch die Verstellbarkeit der Schiebeglieder kann der Schlitten entlang der Führungsschiene verstellbar sein. Hierzu kann der Schlitten durch das Verstellen entlang der Führungsschiene die Verstellkraft in mindestens eines der Schiebeglieder einleiten.

Gemäß einer weiteren alternativen oder ergänzenden Ausgestaltung der vorgeschlagenen Lösung kann der Schlitten, zum Einleiten der Verstellkraft in einen Teil der Schiebeglieder, an mindestens einem der Schiebeglieder anliegen. Hierdurch kann der Schlitten in jeder möglichen Position entlang der Führungsschiene den genannten Teil der Schiebeglieder von der Abdeckposition in die mindestens eine Verstellposition verstellen. Hierdurch kann eine Öffnung von den an dem Schlitten anliegenden Schiebegliedern und den dazu benachbarten Schiebegliedern freigegeben werden.

Insbesondere kann der Teil der Schiebeglieder, in welchen die Verstellkraft eingeleitet wird, mehr Schiebeglieder umfassen als eine Anzahl der Schiebeglieder, die an dem Schlitten anliegen. Hierdurch kann sich eine Ausdehnung der Öffnung entlang der Längserstreckungsachse der Schienenbaugruppe über eine Ausdehnung des Schlittens entlang der Längserstreckungsachse hinaus erstrecken. Dies kann eine Verstellbarkeit des Schlittens verbessern.

Durch das Verstellen des Schlittens entlang der Führungsschiene können die Schiebeglieder der Schienenbaugruppe verdrängt werden. Durch das Verdrängen können die Schiebeglieder von der Abdeckposition in die mindestens eine Verstellposition verstellt werden.

Gemäß einer weiteren Ausgestaltung der vorgeschlagenen Lösung kann der Schlitten zum Abdecken von aus der Abdeckposition verstellter Schiebeglieder eine Blende aufweisen. Hierdurch kann ein Eindringen von Objekten, wie Schmutz oder Körperteile, in die Führungsschiene vermeidbar sein.

In einer exemplarischen Ausgestaltung kann die Blende in einer Projektion auf die Schienenabdeckung alle aus der Abdeckposition verstellten Schiebeglieder abdecken. Insbesondere kann sich die Blende in der Projektion auf die Schienenabdeckung entlang der Längserstreckungsachse der Schienenabdeckung über den Schlitten hinaus erstrecken.

Die Blende kann auf einer einem Fahrzeuginnenraum zugewandten Seite der Schienenabdeckung an dem Schlitten angeordnet sein.

In einer weiteren Ausgestaltung der vorgeschlagenen Lösung weist die Schienenbaugruppe mindestens ein mit der Führungsschiene verbundenes Verkleidungsträgersegment, zur Verbindung der Schienenbaugruppe mit einer Innenraumverkleidung, auf. Dies kann die Montage der Schienenbaugruppe zu mindestens teilweise unterhalb einer Innenraumverkleidung ermöglichen.

Exemplarisch kann die Innenraumverkleidung ein Dachhimmel, ein Wandelement, oder ein Bodenbelag umfassen.

In einer weiteren Ausgestaltung der vorgeschlagenen Lösung kann das mindestens eine Verkleidungsträgersegment zur werkzeuglosen Montage formschlüssig an der Führungsschiene festlegbar sein. Dies kann einen Montageaufwand für die Schienenbaugruppe reduzieren.

In einer alternativen oder ergänzenden Ausgestaltung der vorgeschlagenen Lösung kann das mindestens eine Verkleidungsträgerelement, zur werkzeuglosen Montage, mit der Führungsschiene verrastbar sein.

Exemplarisch kann das mindestens eine Verkleidungsträgersegment mit einer Mehrzahl von Rastnasen in eine Mehrzahl von Rastöffnungen der Führungsschiene eingreifen. Dies kann eine schnelle und sichere Montage des mindestens einen Verkleidungsträgersegmentes an der Führungsschiene ermöglichen. In einer Ausgestaltung der vorgeschlagenen Lösung kann das mindestens eine Verkleidungsträgersegment mindestens in Teilen elastisch ausgebildet sein.

Grundsätzlich kann die Mehrzahl von Rastöffnungen zur Verrastung des Verkleidungsträgersegmentes mit der Führungsschiene auch an der an dem mindestens einen Verkleidungsträgersegment und die Mehrzahl von Rastnasen in der Führungsschiene angeordnet sein.

In einer weiteren Ausgestaltung der vorgeschlagenen Lösung kann die Schienenabdeckung mit der Führungsschiene über das mindestens eine Verkleidungsträgersegment verbunden sein. Demnach kann das mindestens eine Verkleidungsträgersegment an der Führungsschiene und die Schienenabdeckung an dem mindestens einen Verkleidungsträgersegment festlegbar sein.

In einer weiteren Ausgestaltung der vorgeschlagenen Lösung kann die Schienenabdeckung zur werkzeuglosen Montage formschlüssig an dem mindestens einen Verkleidungsträgersegment festlegbar sein. Dies kann den Montageaufwand für die Schienenbaugruppe weiter reduzieren.

Exemplarisch kann das mindestens eine Verkleidungsträgersegment, zur formschlüssigen Verbindung mit der Schienenabdeckung, mindestens eine orthogonal zur Längserstreckungsachse erstreckte Rastöffnung aufweisen.

Weiterhin exemplarisch kann die Schienenabdeckung mit mindestens einer und mindestens in Teilen elastischen Rastnase mit der mindestens einen Rastöffnung in dem mindestens einen Verkleidungsträgersegment verrastbar sein. Dies kann eine einfache und sichere Montage der Schienenabdeckung an dem mindestens einen Verkleidungsträgersegment ermöglichen.

Grundsätzlich kann die mindestens eine Rastöffnung zur Verbindung der Schienenabdeckung mit dem mindestens ein Verkleidungsträgersegment auch an der Schienenabdeckung und die mindestens eine Rastnase an dem mindestens einen Verkleidungsträgersegment angeordnet sein.

Die vorangehenden Ausführungen zu den Ausführungen und Vorteilen der vorgeschlagenen Schienenabdeckung finden analog auch auf die vorgeschlagene Schienenbaugruppe Anwendung.

Gemäß einem weiteren Aspekt der vorgeschlagenen Lösung wird die eingangs genannte Aufgabe auch von einer Schienenabdeckung, zum mindestens teilweisen Abdecken einer Führungsschiene in einem Fahrzeuginnenraum, gemäß Anspruch 13 gelöst, wobei die Schienenabdeckung als vormontierte und an die Führungsschiene montierbare Baueinheit mit einem Gehäuseteil ausgebildet ist, an dem das mindestens eine Schiebeglied verstellbar gelagert ist.

Das mindestens eine aus der Abdeckposition verstellte Schiebeglied kann in einem bestimmungsgemäß an einer Führungsschiene montierten Zustand der vormontierten Baueinheit die Öffnung definieren, durch welche sich ein an der Führungsschiene gelagerter Schlitten erstrecken kann. Mindestens ein weiterer Abschnitt der Führungsschiene kann durch das mindestens eine Schiebeglied in seiner Abdeckposition abdeckbar sein. Das mindestens eine Schiebeglied kann in der Abdeckposition somit die Führungsschiene vor externen Einflüssen schützen und eine Gefahr eines Verklemmens reduzieren.

Eine derartige Baueinheit kann vor Montage auf eine bestimmungsgemäße Funktion überprüfbar sein und einen Montageaufwand bei einer Fahrzeugendmontage reduzieren. Exemplarisch kann die vormontierte Baueinheit werkzeuglos in dem Fahrzeuginnenraum montierbar sein. In eine Ausführungsform kann die vormontierte Baueinheit hierfür eingerichtet sein, mit einem in dem Fahrzeuginnenraum montierten Bauteil zu verrasten.

In einer Ausgestaltung der vorgeschlagenen vormontierten Baueinheit kann die als vormontierte Baueinheit ausgebildete Schienenabdeckung gemäß dem ersten Aspekt der vorgeschlagenen Lösung mit einer Mehrzahl von Schiebgliedern ausgebildet sein, wobei das mindestens eine Kopplungselement mindestens zwei der Schiebeglieder miteinander koppelt.

Durch die Ausbildung der vormontierten Baueinheit mit einer Mehrzahl von Schiebegliedern kann die Öffnung ohne Verformung der einzelnen Schiebeglieder freigebbar sein. Entsprechend können die Schiebeglieder aus einem dauerhaften und/oder unelastischen Material herstellbar sein, um eine Trittfestigkeit und Lebensdauer der vormontierten Baueinheit zu verbessern.

Gemäß einem weiteren Aspekt der vorgeschlagenen Lösung wird die eingangs genannte Aufgabe auch durch ein Montageverfahren zur Montage einer Schienenbaugruppe gemäß Anspruch 14 gelöst werden. Das vorgeschlagene Montageverfahren umfasst dabei mindestens:
- ein Bereitstellen einer Schienenabdeckung der Schienenbaugruppe zum mindestens teilweisen Abdecken einer Führungsschiene in einem Fahrzeuginnenraum als vormontierte Baueinheit,
- Befestigen einer Führungsschiene der Schienenbaugruppe mit einem an der Führungsschiene verstellbar gelagerten Schlitten in einem Fahrzeuginnenraum, und
- werkzeugloses Befestigen der vormontierten Baueinheit, in dem Fahrzeuginnenraum, wobei mindestens ein Teil der vormontierten Baueinheit durch Anlage an dem Schlitten eine Öffnung für den Schlitten freigibt.

Durch das vorgeschlagene Montageverfahren kann die Führungsschiene in dem Fahrzeuginnenraum montierbar sein, ohne dass eine mit der Führungsschiene bereits verbundene Schienenabdeckung einen Zugang zu Befestigungsmitteln, zur Befestigung der Führungsschiene, erschwert. Die Schienenabdeckung kann darüber hinaus vormontierbar und auf die bestimmungsgemäße Funktion überprüfbar sein, bevor die vormontierte Baueinheit gemäß dem vorgeschlagenen Montageverfahren zur mindestens teilweisen Abdeckung der Führungsschiene in dem Fahrzeuginnenraum montiert wird. Insbesondere kann vormontierte Baueinheit durch einfaches Anclipsen befestigbar sein. Dies kann einen Montageaufwand reduzieren.

In einer weiteren Ausgestaltung des vorgeschlagenen Montageverfahrens kann eine Schienenabdeckung gemäß der vorgeschlagenen Lösung als vormontierte Baueinheit bereitgestellt werden.

Exemplarisch kann das Montageverfahren ein werkzeugloses Verbinden mindestens eines Verkleidungsträgersegmentes, zur Befestigung einer Innenraumverkleidung an der Schienenbaugruppe, mit der Führungsschiene umfassen. Hierdurch kann die Schienenbaugruppe durch das vorgeschlagene Montageverfahren zumindest in Teilen unterhalb einer Innenraumverkleidung montiert werden.

Weiterhin exemplarisch kann das mindestens eine Verkleidungsträgersegment mit der Führungsschiene verrastet werden. Dies kann den Montageaufwand weiter reduzieren.

In einer weiteren exemplarischen Ausgestaltung kann die Schienenabdeckung mit der Führungsschiene über das mindestens eine Verkleidungsträgersegment werkzeuglos verbunden werden. In der Endmontage kann das mindestens eine Verkleidungsträgersegment somit an der Führungsschiene werkzeuglos festlegbar und die Schienenabdeckung an dem mindestens einen Verkleidungsträgersegment werkzeuglos festlegbar sein. Dies kann ein Montageaufwand auch bei einer teilweise unterhalb Innenraumverkleidung angeordnet Montage reduzieren.

Die vorangehenden Ausführungen zu den Ausführungen und Vorteilen der vorgeschlagenen Schienenabdeckung sowie der vorgeschlagenen Schienenbaugruppe finden analog auch auf das Montageverfahren Anwendung.

Weiterhin wird die eingangs genannte Aufgabe durch eine Sitzbaugruppe mit einer Schienenbaugruppe gemäß der vorgeschlagenen Lösung und einem über den Schlitten verstellbar an der Führungsschiene gelagerten Fahrzeugsitz gelöst.

Darüber hinaus wir die eingangs genannte Aufgabe auch durch ein Fahrzeug mit einer entsprechenden Sitzbaugruppe gelöst.

Die vorangehenden Ausführungen zu den Ausführungen und Vorteilen der vorgeschlagenen Schienenbaugruppe finden analog auch auf die vorgeschlagene Sitzbaugruppe und das vorgeschlagene Fahrzeug Anwendung.

Die beigefügten Figuren veranschaulichen exemplarisch mögliche Ausführungsformen der vorgeschlagenen Lösung.

Hierbei zeigen:
- Figur 1: eine perspektivische Darstellung einer ersten Ausführungsvariante der vorgeschlagenen Schienenabdeckung mit einer Mehrzahl entlang einer Längserstreckungsachse hintereinander angeordneter und an einem Gehäuse gelagerter Schiebeglieder, die über ein Kopplungselement gekoppelt sind;
- Figur 2: eine perspektivische Darstellung einer Reihe miteinander gekoppelte Schiebeglieder;
- Figur 3A: eine perspektivische Darstellung eines Federsystems umfassend eine wellenförmige Blattfeder und eine Kraftverteilungs-Blattfeder;
- Figur 3B: eine perspektivische Detailansicht des Federsystems aus Figur 3A;
- Figur 4: eine Draufsicht auf eine weitere Ausführungsform der vorgeschlagenen Schienenabdeckung in einem bestimmungsgemäß an einer Führungsschiene montierten Zustand;
- Figur 5A: ein Querschnitt durch eine weitere Ausführungsform der vorgeschlagenen Schienenabdeckung;
- Figur 5B: eine perspektivische Ansicht einer Unterseite der in Figur 5A dargestellten Schienenabdeckung;
- Figur 6A: eine Draufsicht auf eine weitere Ausführungsform der vorgeschlagenen Schienenabdeckung mit zwei nebeneinander angeordneten Reihen von Schiebegliedern in einem bestimmungsgemäß an einer Führungsschiene montierten Zustand;
- Figur 6B: eine Draufsicht auf die Unterseite der in Figur 6A dargestellten Schienenabdeckung;
- Figur 7A: einen Querschnitt durch eine Ausführungsform mit zwei nebeneinander angeordneten Reihen von Schiebegliedern in einem bestimmungsgemäß montierten Zustand;
- Figur 7B: einen weiteren Querschnitt der aus Figur 7A dargestellten Ausführungsform;
- Figur 8A: eine perspektivische Darstellung einer teilmontierten Schienenbaugruppe mit einer Führungsschiene und drei Verkleidungsträgersegmenten;
- Figur 8B: eine weitere perspektivische Darstellung der Schienenbaugruppe aus Figur 8A mit einer an den Verkleidungsträgersegmenten festgeclipsten Schienenabdeckung;
- Figur 8C: eine weitere perspektivische Darstellung der Schienenbaugruppe aus Figur 8A und 8B mit einem zusätzlichen Endstück zur teilweisen Abdeckung eines der Verkleidungsträgersegmente;
- Figur 9A: eine Draufsicht auf eine Ausführungsform der vorgeschlagenen Schienenbaugruppe mit einer an dem Schlitten angeordneten Blende;
- Figur 9B: eine Seitenansicht der in Figur 9A dargestellten Schienenbaugruppe;
- Figur 10: eine erste Ausführungsform einer als vormontierte Baueinheit ausgebildeten Schienenabdeckung mit einem Gehäuse und einem an dem Gehäuse verstellbar gelagerten Schiebeglied;
- Figur 11: ein möglicher Verfahrensablauf einer ersten Ausführungsform des vorgeschlagenen Montageverfahrens;
- Figur 12A: eine perspektivische Darstellung einer gemäß einem ersten Schritt des vorgeschlagenen Montageverfahrens an einem Fahrzeugboden befestigten Führungsschiene mit einem an der Führungsschiene verstellbar gelagerten Schlitten;
- Figur 12B: eine weitere perspektivische Darstellung der Führungsschiene aus Figur 12A mit einer Mehrzahl von gemäß einem weiteren Schritt des Montagefahrens befestigen Verkleidungsträgersegmenten;
- Figur 12C: eine weitere perspektivische Darstellung der Führungsschiene aus Figur 12B mit einem gemäß einem weiteren Schritt des Montagefahrens befestigen Bodenbelag;
- Figur 12D: eine perspektivische Darstellung der Führungsschiene aus Figur 12C mit einer gemäß einem weiteren Schritt des Montagefahrens zu befestigenden als vormontierte Baueinheit ausgebildeten Schienenabdeckung; und
- Figur 12E: eine gemäß dem vorgeschlagene Montageverfahren fertig montierte Schienenbaugruppe.

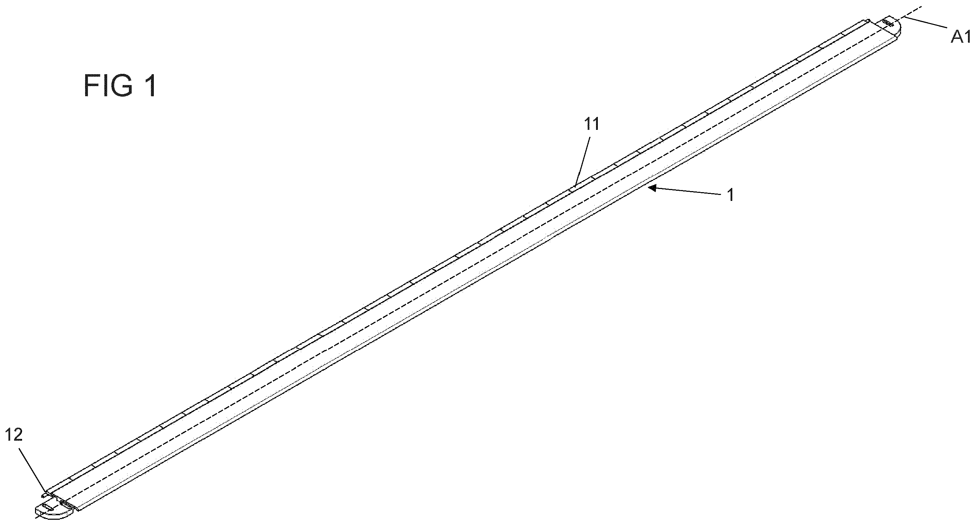

Figur 1 zeigt eine perspektivische Darstellung einer Schienenabdeckung 1 zum mindestens teilweisen Abdecken einer Führungsschiene 2 in einem Fahrzeuginnenraum. Entlang einer Längserstreckungsachse A1 der Schienenabdeckung 1 ist eine Mehrzahl von Schiebegliedern 11 hintereinander angeordnet. Jedes der Schiebeglieder 11 ist zwischen einer Abdeckposition und mindestens eine Verstellposition verstellbar. In einem bestimmungsgemäß an einer Führungsschiene 2 montierten Zustand sind diejenigen Schiebeglieder 11, die in ihrer hier dargestellten Abdeckposition angeordnet sind, zum Abdecken eines Teils der Führungsschiene 2 vorgesehen. Weiterhin sind diejenigen Schiebeglieder 11, die in ihrer hier nicht dargestellten mindestens einen Verstellposition angeordnet sind, zum Freigeben einer Öffnung vorgesehen. Darüber hinaus weist die Schienenabdeckung 1 ein Kopplungselement 12 auf, das die Schiebeglieder 11 miteinander verbindet. Über das Kopplungselement 12 ist bei einem Verstellen eines der Schiebeglieder 11 von der Abdeckposition in die Verstellposition eine Verstellkraft F11 in wenigstens ein weiteres Schiebeglied 11 einleitbar, um das mindestens eine weitere Schiebeglied 11 in Richtung seiner Verstellposition zu verstellen.

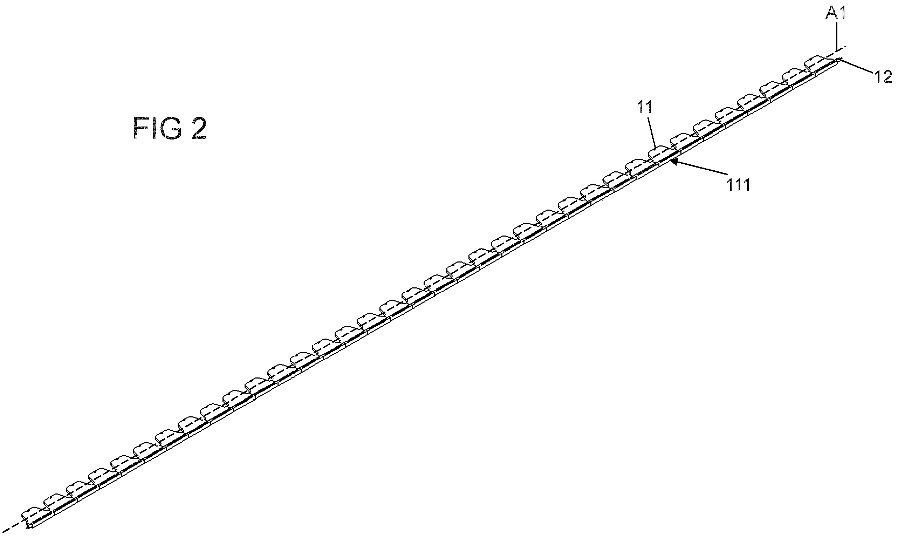

Figur 2 zeigt eine Reihe 14 hintereinander angeordneter und mit genau einem Kopplungselement 12 gekoppelte Schiebeglieder 11. Das Kopplungselement 12 ist mit jedem der Schiebeglieder 11 jeweils über ein Befestigungsabschnitt 111 verbunden. Die Befestigungsabschnitte 111 aller Schiebeglieder 11 sind parallel zu der Längserstreckungsachse A1 angeordnet. In der dargestellten Ausführungsform sind die Schiebeglieder 11 als flächige Elemente ausgebildet.

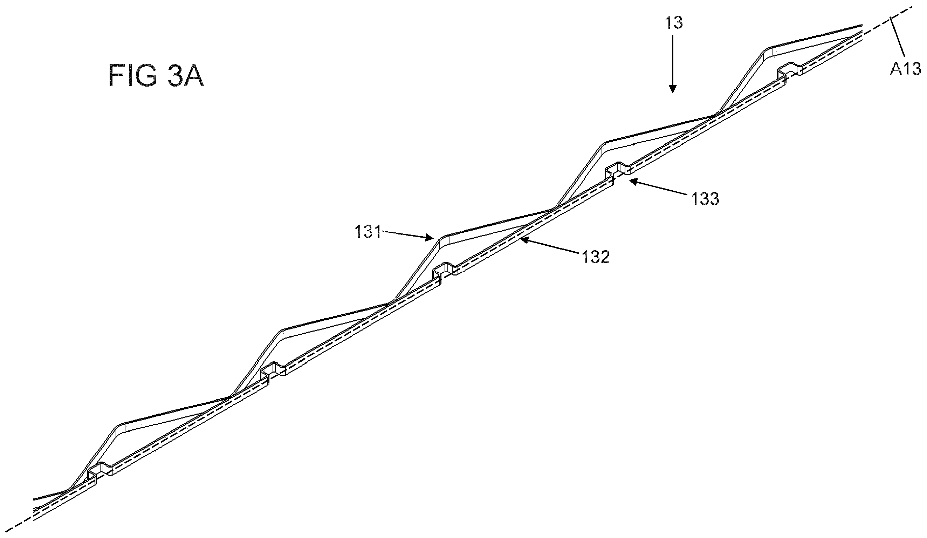

Figur 3A zeigt eine Ausführungsform eines Federsystems 13 der vorgeschlagenen Schienenabdeckung 1, zum Vorspannen der Schiebeglieder 11 in ihre Abdeckposition. Die dargestellte Ausführungsform umfasst eine wellenförmige Blattfeder 131 sowie eine Kraftverteilungs-Blattfeder 132. Die Kraftverteilungs-Blattfeder 132 ist im Wesentlichen entlang einer Erstreckungsachse A13 erstreckt und liegt mit äquidistanten Abschnitten an der wellenförmigen Blattfeder 131 an. Weiterhin weist die Kraftverteilungs-Blattfeder 132 gleichmäßig beabstandete Vorsprünge 133 auf, die sich ausgehend von der Erstreckungsachse A13 in Richtung der wellenförmigen Blattfeder 131 erstrecken. Die wellenförmige Blattfeder 131 beschreibt in einer Projektion auf eine Erstreckungsebene der wellenförmigen Blattfeder 131 im Wesentlichen eine Sägezahnform. Jedes Tal der Sägezahnform liegt dabei an der Kraftverteilungs-Blattfeder 132 an.

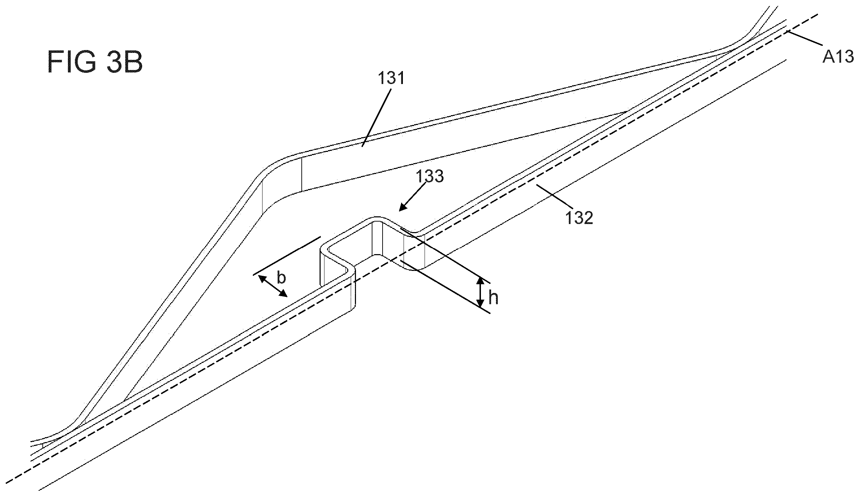

Figur 3B zeigt eine perspektivische Detaildarstellung eines der Vorsprünge 133 der in Figur 3A dargestellten Kraftverteilungs-Blattfeder 132. Die Kraftverteilungs-Blattfeder 132 weist ebenso wie die wellenförmige Blattfeder 131 eine orthogonal auf einer Erstreckungsebene des Federsystems 13 liegende Materialhöhe auf. Die Materialhöhe definiert zugleich eine Höhe h des Vorsprungs 133 der Kraftverteilungs-Blattfeder 132. Ferner definiert die Erstreckung des Vorsprungs 133 ausgehend von der Erstreckungsachse A13 der Kraftverteilungs-Blattfeder 132 in Richtung der wellenförmigen Feder 131 eine Breite b des Vorsprungs 133. In der in Figur 3B dargestellten Ausführungsform ist die Höhe h des Vorsprungs 133 kleiner als die Breite b.

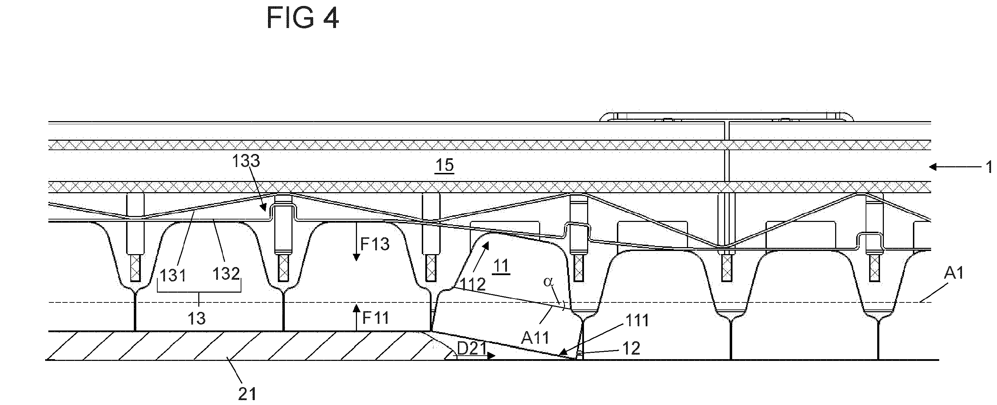

Figur 4 zeigt eine Draufsicht auf eine Reihe 14 von entlang einer der Längserstreckungsachse A1 hintereinander angeordneter Schiebeglieder 11, die an einem Gehäuse 15 zwischen der Abdeckposition und der mindestens ein Verstellposition verstellbar gelagert sind. An dem Gehäuse 15 stützt sich in regelmäßigen Abständen die wellenförmige Blattfeder 131 des Federsystems 13 ab. Weiterhin liegt die wellenförmige Blattfeder 131 an der Kraftverteilungs-Blattfeder 132 an und beaufschlagt diese mit der Vorspannkraft F13. Die Kraftverteilungs-Blattfeder 132 liegt an Stützabschnitten 112 der Schiebeglieder 11 an und leitet somit die Vorspannkraft F13 in die Schiebeglieder 11 ein. Hierdurch sind die Schiebeglieder 11 in ihre Abdeckposition vorgespannt. Die Schiebeglieder 11 sind mit dem als Seil ausgebildeten Kopplungselement 12 jeweils über ihre Befestigungsabschnitte 111 verbunden.

Die drei links in der Figur 4 dargestellten Schiebeglieder 11 liegen jeweils mit ihrem Befestigungsabschnitt 111 an einem an einer Führungsschiene 2 gelagerten Schlitten 21 an. Der hier als Querschnitt dargestellte Schlitten 21 verdrängt die an den Schlitten 21 angrenzenden Schiebeglieder 11. Hierzu leitet der Schlitten 21 in die anliegenden Schiebeglieder 11 die Verstellkraft F11 ein, wodurch die anliegenden Schiebeglieder 11 in die mindestens eine Verstellposition verstellt sind. Durch die Kopplung der Schiebeglieder 11 über das Kopplungselement 12 ist auch ein im Bild zentral dargestelltes Schiebeglied 11, welches nicht an dem Schlitten 21 anliegt, aus der Abdeckposition verstellt. Dabei ist das genannte zentrale Schiebeglied 11 mit einer Längsachse A11 gegenüber der Längserstreckungsachse A1 der Schienenabdeckung 1 verkippt. Die Längsachse A11 des Schiebegliedes 11 und die Längserstreckungsachse A1 der Schienenabdeckung 1 schließen hierbei einen Kippwinkel α ungleich 0° ein. Die Kippwinkel α der an dem Schlitten 21 anliegenden Schiebeglieder 11 sowie der Schiebeglieder 11 in der Abdeckposition betragen dagegen 0°. Durch ein Verstellen des Schlitten 21 entlang einer Verstellrichtung D21 kann der Schlitten 21 mit dem Befestigungsabschnitt 111 des zentral dargestellten verkippten Schiebegliedes 11 in Anlage gebracht werden. Hierdurch kann das verkippte Schiebeglied 11 weiter in Richtung seiner maximalen Verstellposition verstellt werden, wobei mit fortschreitendem Verstellen des zentral dargestellten verkippten Schiebegliedes 11 in seine maximale Verstellposition auch das in der Figur rechts neben dem verkippten Schiebeglied 11 dargestellte Schiebeglied 11 aus seine Abdeckposition verstellt wird. Somit kann durch die Kopplung beim Verstellen des Schlittens 21 ein sukzessives Verstellen jeweils benachbarter Schiebeglieder 11 bewirkt werden. Bezogen auf die Verstellrichtung D21 des Schlittens 21 ist aufgrund der Kopplung der Schiebeglieder 11 sowohl vor als auch hinter dem Schlitten 21 jeweils mindestens ein Schiebeglied 11, das nicht an dem Schlitten 21 anliegt, aus der Abdeckposition verstellt. Eine von den Schiebegliedern 11, die nicht in der Abdeckposition vorliegen, definierte Öffnung für den Schlitten 21 erstreckt sich somit über den Schlitten 21 hinaus. Anders gesagt eilt die Öffnung beim Verstellen des Schlitten 21 dem Schlitten 21 sowohl voraus als auch nach.

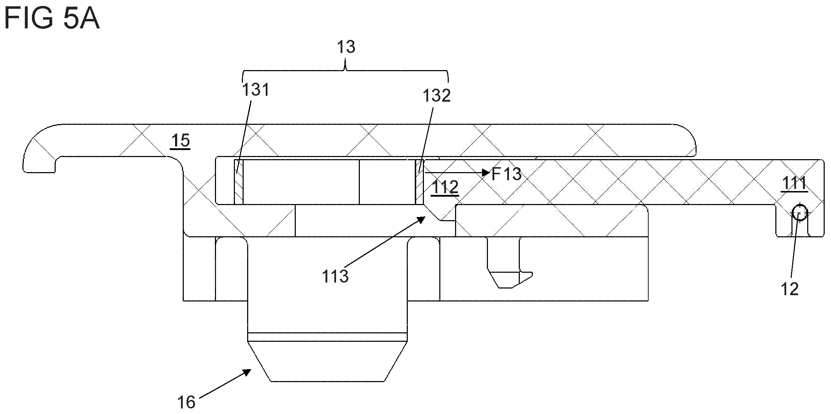

Figur 5A zeigt einen Querschnitt der vorgeschlagenen Schienenabdeckung 1. Das in dem Querschnitt dargestellte Schiebeglied 11 ist in seiner Abdeckposition angeordnet und stützt sich mit einem Sicherungsvorsprung 113 an dem Gehäuse 15 ab. Der Sicherungsvorsprung 113 blockiert dabei ein Verstellen des Schiebegliedes 11 von der mindestens einen Verstellposition in die Abdeckposition über die Abdeckposition hinaus. Ein Herausrutschen des Schiebegliedes 11 ist somit blockiert. Auf an einem benachbart zu dem Sicherungsvorsprung 113 liegenden Stützabschnitt 112 liegt die Kraftverteilungs-Blattfeder 132 am Schiebeglied 11 an und leitet die Vorspannkraft F13 in das Schiebeglied 11 ein. An dem dem Stützabschnitt 112 gegenüberliegenden Befestigungsabschnitt 111 weist das Schiebeglied 11 einen im Bild nach unten vor stehenden U-förmigen Abschnitt auf, in welchem das als Seil ausgebildete Kopplungselement 12 geführt wird. Zum Einleiten der Vorspannkraft F13 stützt sich die wellenförmige Blattfeder 131 sowohl an der Kraftverteilungs-Blattfeder 132 als auch an einem dem Befestigungsabschnitt 111 des Schiebegliedes 11 gegenüberliegenden Abschnitt des Gehäuses 15 ab. Das Gehäuse 15 weist auf einer im Bild unten dargestellten Unterseite eine Rastnase 16 zur Befestigung des Gehäuses 15, bzw. der Schienenabdeckung 1, an einer Führungsschiene 2 oder an einem weiteren Bauteil auf.

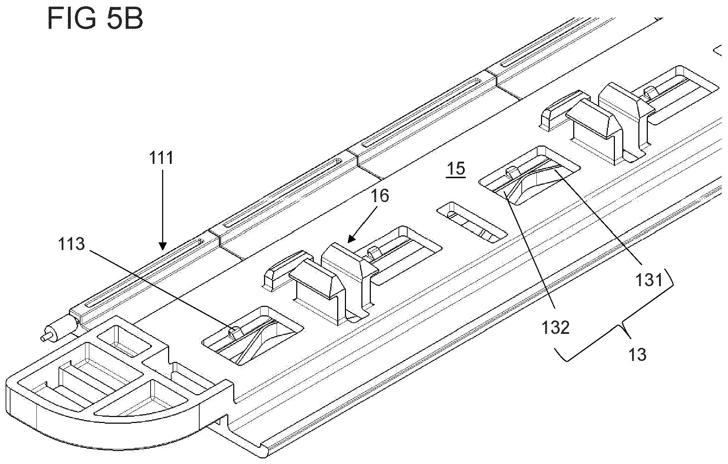

Figur 5B zeigt die Unterseite der in Figur 5A dargestellten Ausführungsform der Schienenabdeckung 1.

In einer von den in den Figuren 1 bis 5B dargestellten Ausführungsformen abweichenden Ausführungsform kann die vorgeschlagene Schienenabdeckung 1 grundsätzlich auch eine Mehrzahl von hintereinander angeordneten und miteinander gekoppelten Reihen 14 aufweisen.

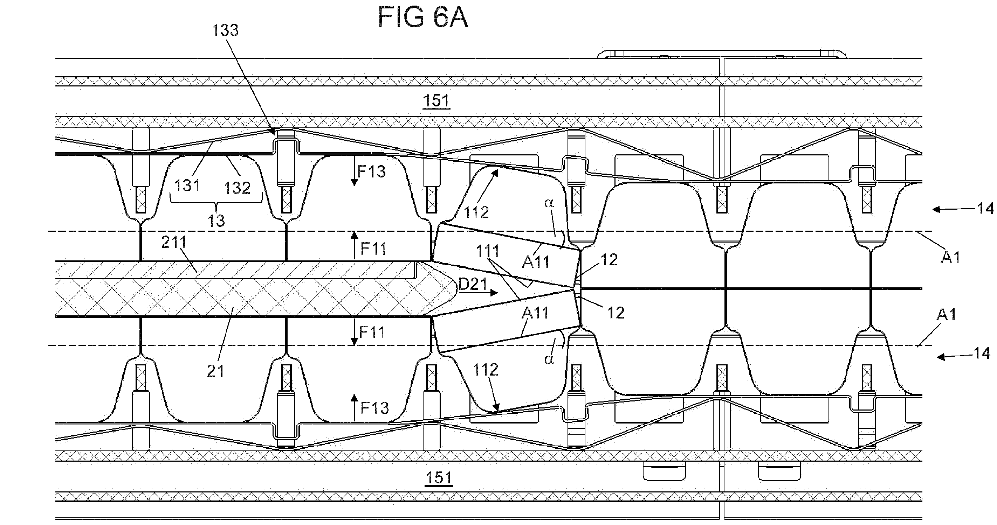

Figur 6A zeigt eine Ausführungsform der vorgeschlagenen Schienenabdeckung 1 mit zwei parallel zueinander angeordneten Reihen 14 von hintereinander angeordneten Schiebegliedern 11. Jede einzelne der in Figur 6A dargestellten Reihen 14 von Schiebegliedern 11 entspricht der in Figur 4 dargestellten Reihe 14. Die Reihen 14 sind dabei beidseitig eines Schlitten 21 angeordnet. Beide Reihen 14 von Schiebegliedern 11 sind zueinander jeweils spiegelverkehrt bezogen auf eine Spiegelung an der Verstellrichtung D21 des Schlitten 21 angeordnet. Das Gehäuse 15 ist, in Abweichung zu der in Figur 4 dargestellten Ausführungsform mit zwei Gehäuseteilen 151 ausgebildet, wobei jede der Reihen 14 jeweils an einem der Gehäuseteile 151 verstellbar gelagert ist. Weiterhin weist der in der Figur 6A dargestellte Schlitten 21 in Abweichung zu der Figur 4 dargestellten Ausführungsform einen Kopplungsabschnitt 211 zur Verbindung des Schlittens 21 mit einer Innenraumkomponente auf. Die von dem Schlitten 21 dargestellten Abschnitte 21, 211 bilden zusammen einen im Wesentlichen rechteckigen Querschnitt mit einem im Bild auf der rechten Seite angrenzenden keilförmigen Rand.

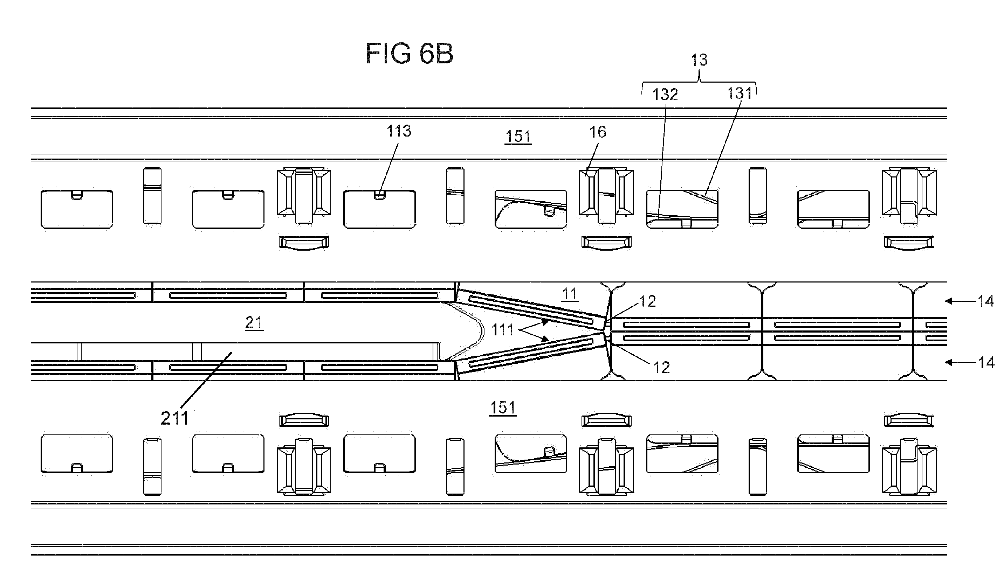

Figur 6B zeigt die Unterseite der in Figur 6A dargestellten Ausführungsform der vorgeschlagenen Schienenabdeckung 1. Die Gehäuseteile 151 decken die Schiebeglieder 11 weitestgehend ab, sodass im Wesentlichen die Schiebeglieder 11 in der Abdeckposition zu sehen sind. Beide Gehäuseteile 151 weisen zur Befestigung der Schienenabdeckung 1 mit einem weiteren Bauteil eine Mehrzahl von äquidistanten entlang der Längserstreckungsachse A1 angeordneten Rastnasen 16 auf. Jede der Rastnasen 16 ist geeignet, formschlüssig in eine Rastöffnung an einem Bauteil einzugreifen, um eine formschlüssige Verbindung zwischen der Schienenabdeckung 1 und dem Bauteil herzustellen. Hierdurch kann die dargestellte Ausführungsform der vorgeschlagenen Schienenbaugruppe durch ein einfaches verclipsen an dem Bauteil montierbar sein.

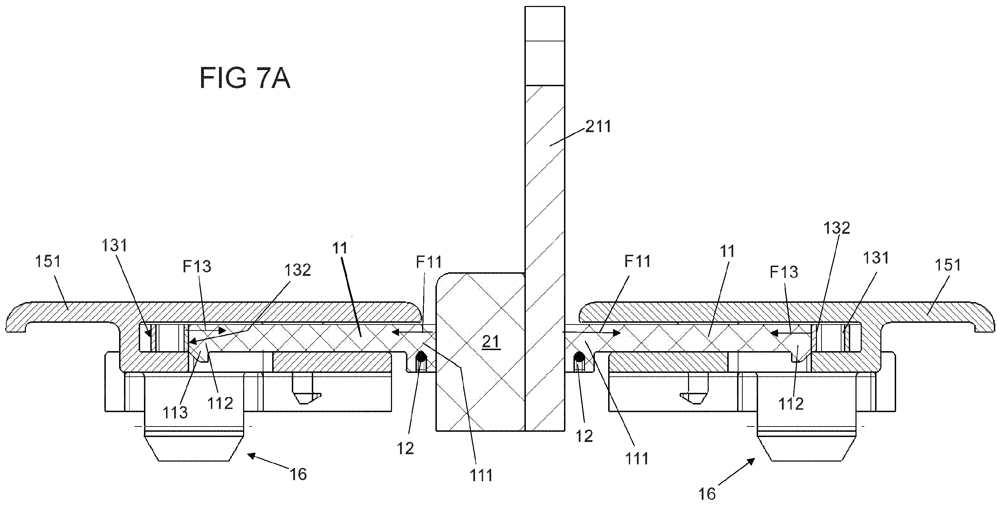

Figur 7A zeigt einen Querschnitt einer bestimmungsgemäß montierten Schienenabdeckung 1 mit zwei parallelen Reihen 14 von Schiebegliedern 11. Jede einzelne der Reihen 14 von Schiebegliedern 11 entspricht der in Figur 5A dargestellten Reihe 14. Die Reihen 14 sind dabei beidseitig eines Schlittens 21 angeordnet. Beide Reihen 14 von Schiebegliedern 11 sind zueinander jeweils spiegelverkehrt bezogen auf eine Spiegelung an einer bezogen auf das Bild vertikalen Spiegelachse angeordnet. Dabei sind die beiden dargestellten gegenüberliegenden Schiebeglieder 11 jeweils in der maximalen Verstellposition angeordnet. Beide Schiebeglieder 11 liegen mit ihrem Befestigungsabschnitt 111 an dem Schlitten 21 an. Dabei weist der Schlitten 21 den Kopplungsabschnitt 211 zur Kopplung des Schlittens 21 mit einer Innenraumkomponente auf. Durch die Anlage des Schlittens 21 an den Schiebegliedern 11 wird die Verstellkraft F11 in jedes der Schiebeglieder 11 eingeleitet, wodurch die Schiebeglieder 11 aus der Abdeckposition in die dargestellte maximale Verstellposition verstellt sind. Zur Kopplung der dargestellten Schiebeglieder 11 mit mindestens einem weiteren Schiebeglied 11 sind die Schiebeglieder 11 jeweils mit einem als Seil ausgebildete Kopplungselement 12 verbunden.

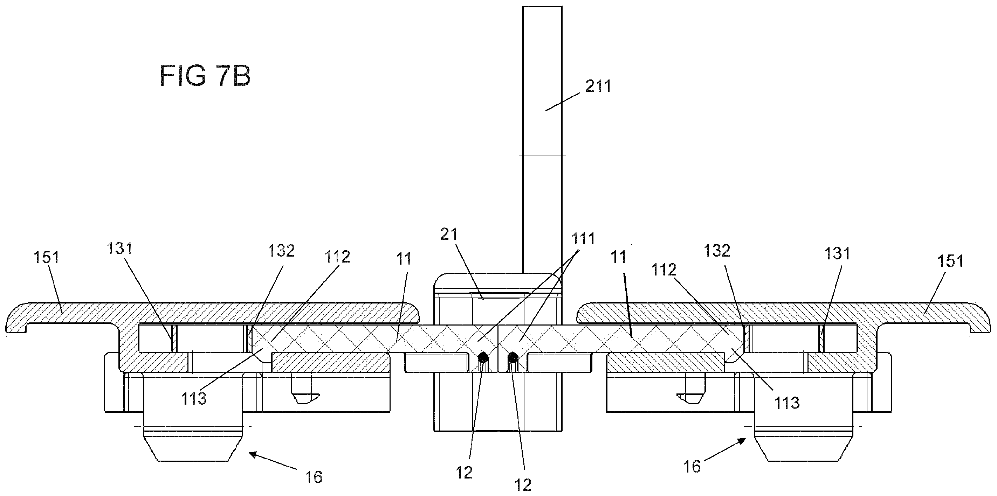

In Figur 7B ist die in Figur 7A dargestellte Ausführungsform mit einem weiteren Querschnitt dargestellt. Im Unterschied zu der Figur 7A dargestellten Anordnung sind die in Figur 7B dargestellten Schiebeglieder 11 der beiden Gehäuseteile 151 in ihrer Abdeckposition angeordnet. Demnach liegen beide Schiebeglieder 11 mit ihrem Befestigungsabschnitt 111 aneinander an. Die Schiebeglieder 11 verschließen somit einen von den Gehäuseteilen 151 definierten Schlitz, der eine Öffnung zwischen einem Fahrzeuginnenraum und einer nicht dargestellten unterhalb der Schiebeglieder 11 liegenden Führungsschiene 2 darstellt.

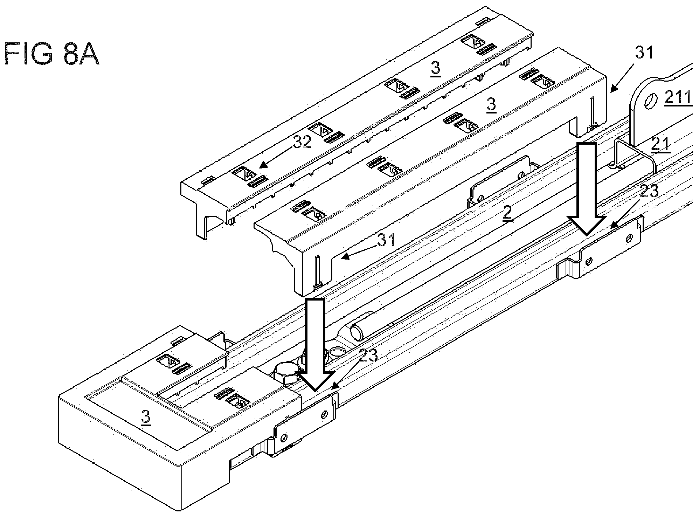

Figur 8A zeigt eine Schienenbaugruppe mit einer Führungsschiene 2 und einem verstellbar daran gelagerten Schlitten 21 nebst dem Kopplungsabschnitt 211. Über den Kopplungsabschnitt 211 ist eine Innenraumkomponente mit dem Schlitten 21 verbindbar. Weiterhin umfasst die dargestellte Schienenbaugruppe ein mit der Führungsschiene 2 verbundenes Verkleidungsträgersegment 3 sowie zwei weitere Verkleidungsträgersegmente 3, die entsprechend der Pfeile an der Führungsschiene 2 anordbar und verrastbar sind. Somit sind die dargestellten Verkleidungsträgersegmente 3 insbesondere werkzeuglos an der Führungsschiene 2 anordbar. Jedes der drei dargestellten Verkleidungsträgersegmente 3 weist auf einer Oberseite eine Mehrzahl von gleichmäßig beanstandeten Rastöffnungen 32 auf. Über diese Rastöffnungen 32 ist insbesondere die vorgeschlagene Schienenabdeckung 1 mit den Verkleidungsträgersegmenten 3 verbindbar.

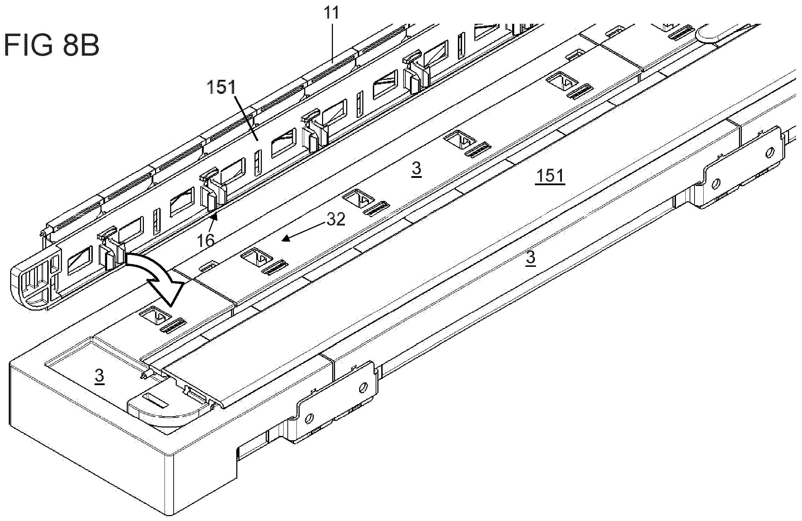

Figur 8B zeigt die vorgeschlagene Schienenbaugruppe aus Figur 8A mit einer teilweise daran montierten Schienenabdeckung 1 bestehend aus zwei Reihen 14 von hintereinander angeordneten, miteinander gekoppelten und an jeweils einem Gehäuseteil 151 gelagerten Schiebegliedern 11. Hierbei ist jeweils eines der Gehäuseteile 151 mit auf der Unterseite des Gehäuseteils 151 gleichmäßig beabstandet angeordneten Rastnasen 16 über die Rastöffnungen 3 der Verkleidungsträgersegmente 3 an den Verkleidungsträgersegmenten 3 verclipst worden. Das zweite der zwei Gehäuseteile 151 ist entsprechend des dargestellten Pfeils an den Verkleidungsträgersegmenten 3 anordbar und verclipsbar.

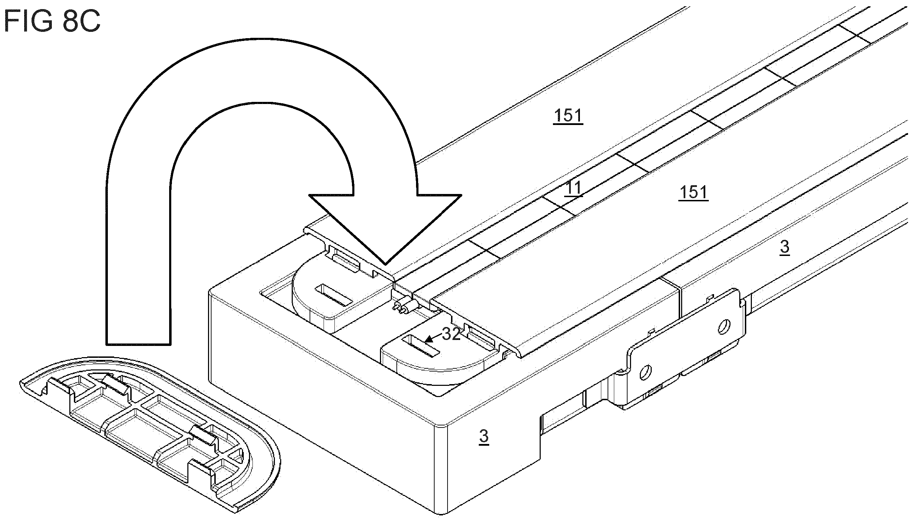

Figur 8C zeigt die vorgeschlagene Schienenbaugruppe aus den Figuren 8A und 8B mit den zwei an den Verkleidungsträgersegmenten 3 verclipsten Gehäuseteilen 151 der Schienenabdeckung 1 und einem weiteren Verkleidungselement zum Abdecken eines von den Gehäuseteilen 151 nicht abgedeckten Abschnittes der Verkleidungsträgersegmente 3 sowie zum Verbinden der beiden Gehäuseteile 151. Die Schiebeglieder 11 beider Gehäuseteilen 151 liegen in der dargestellten Anordnung jeweils in ihrer Abdeckposition vor und verschließen so einen zwischen den Gehäuseteilen 151 definierten Schlitz. Insbesondere decken die Schiebeglieder 11 somit eine unterhalb der Verkleidungsträgersegmente angeordneten Führungsschiene 2 ab.

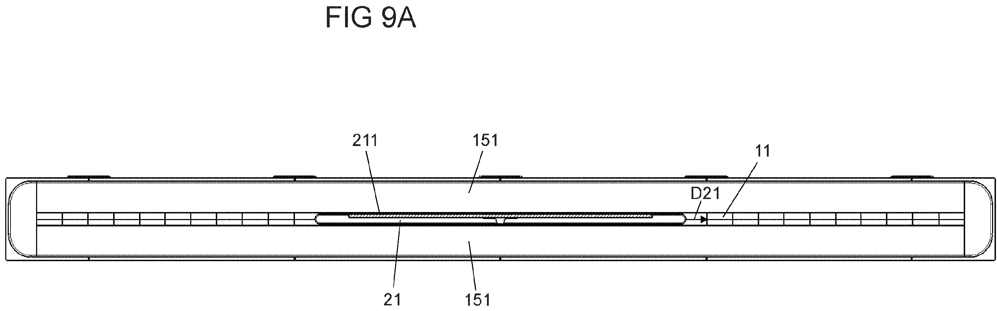

Figuren 9A zeigt eine Draufsicht auf eine Schienenbaugruppe mit einer Blende 22. In der dargestellten Draufsicht entspricht die Blende 22 der Projektion der Blende 22 auf die Schienenabdeckung 1. Die Blende 22 überragt den Schlitten 21 insbesondere in beide Richtungen entlang der Längserstreckungsachse A1 der Schienenabdeckung 1 derart, dass alle durch den Schlitten 21 aus der Abdeckposition verstellten Schiebeglieder 11 abgedeckt sind. Dementsprechend sind in der dargestellten Draufsicht jenseits der Blende 22 ausschließlich Schiebeglieder 11 in der Abdeckposition dargestellt, die den zwischen den beiden Gehäuseteilen 151 definierten Schlitz verschließen. Der Zugang von dem Fahrzeuginnenraum zu der unterhalb der Schienenabdeckung 1 liegenden Führungsschiene 2 ist somit durch die Schienenabdeckung 1 einerseits und die Blende 22 andererseits blockiert. Durch ein Verschieben des Schlittens 21 entlang der Verstellvorrichtung werden die an den Schlitten 21 unmittelbar angrenzenden anliegenden Schiebeglieder 11 sowie mindestens die dazu benachbarten Schiebeglieder 11 aus der Abdeckposition in die mindestens eine Verstellposition ausgelenkt. Dabei werden die ausgelenkten Schiebeglieder 11 stets durch die Blende abgedeckt. Somit kann der Schlitten 21 in der dargestellten Ausführungsform die Schiebeglieder 11 verdrängen, ohne dass in der dargestellten Draufsicht eine Öffnung der Schienenabdeckung 1 entsteht.

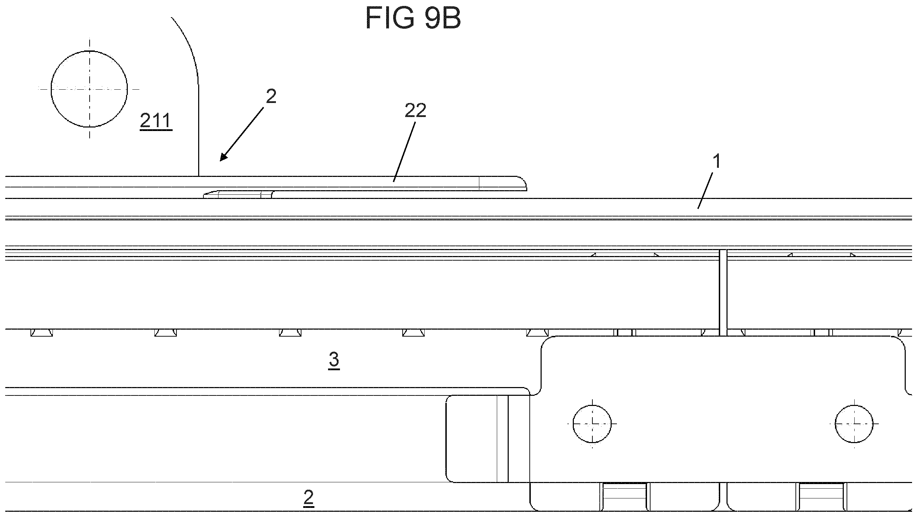

Figur 9B zeigt eine Seitenansicht der Schienenbaugruppe aus Figur 9A mit der Führungsschiene 2, auf welcher die Verkleidungsträgersegmente 3 angeordnet sind. Auf den Verkleidungsträgersegmenten 3 ist die Schienenabdeckung 1 angeordnet, die die Führungsschiene 2 zu mindestens teilweise abdeckt und die Öffnung für den Schlitten 21 freigibt. Der Schlitten 21 weist die Blende 22 auf, die über den Schlitten 21 hinausragt, um aus der Abdeckposition verstellte Schiebeglieder 11 gegenüber dem Fahrzeuginnenraum abzudecken.

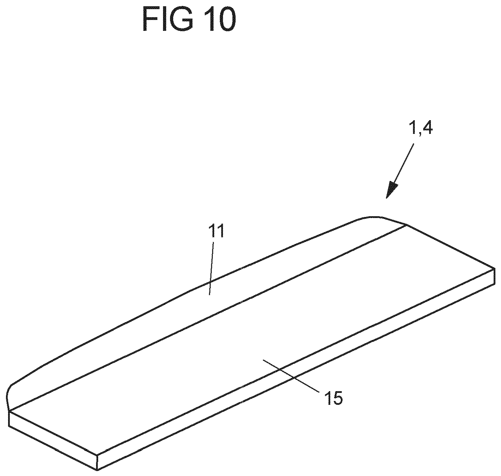

Figur 10 zeigt eine erste Ausführungsform einer als vormontierte Baueinheit 4 ausgebildeten Schienenabdeckung 1 zum mindestens teilweisen Abdecken einer in einem Fahrzeuginnenraum montierten Führungsschiene 2. Die vormontierte Baueinheit 4 weist ein Gehäuseteil 15 und ein an dem Gehäuseteil 15 zwischen der dargestellten Abdeckposition und einer in Richtung des Gehäuseteils 15 verstellbar gelagertes Schiebeglied 11 auf. Die vormontierte Baueinheit 4 kann über nicht dargestellte Befestigungsmittel derart in einem Fahrzeuginnenraum montiert werden, dass die Baueinheit 4 über das Schiebeglied 11 eine in dem Fahrzeuginnenraum montierte Führungsschiene 2 zumindest teilweise abdeckt. Insbesondere kann das mindestens eine verstellbar gelagerte Schiebeglied 11 dabei an einem Schlitten 21 der Führungsschiene 2 anliegen und dadurch von der Abdeckposition in die mindestens eine Verstellposition verstellt sein.

In einer von der dargestellten Ausführungsform abweichenden Ausgestaltung der vormontierten Baueinheit 4 kann diese mit einer Mehrzahl verstellbarer Schiebeglieder 11 ausgebildet sein. Insbesondere kann die Schienenabdeckung 1 gemäß der vorgeschlagenen Lösung als vormontierte Baueinheit 4 ausgebildet sein. Demnach kann die vormontierte Baueinheit 4 eine Mehrzahl miteinander gekoppelter und jeweils verstellbar zwischen der Abdeckposition und der mindestens einen Verstellposition gelagerter Schiebeglieder 11 aufweisen.

Eine derartige vormontierte Baueinheit 4 kann insbesondere vor einer Endmontage auf eine bestimmungsgemäße Funktion überprüfbar sein. Zur werkzeuglosen Montage der vormontierten Baueinheit 4 kann diese exemplarisch Rastnasen aufweisen, um an einem weiteren Bauteil in dem Fahrzeuginnenraum verclipsbar zu sein.

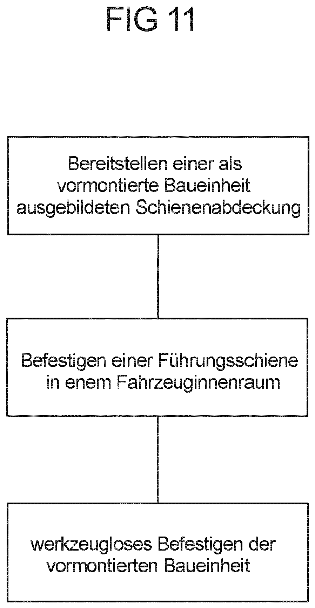

Figur 11 zeigt einen ersten möglichen Ablauf des vorgeschlagenen Montageverfahrens zur Montage einer Schienenbaugruppe. Das vorgeschlagene Montageverfahren umfasst ein Bereitstellen der als vormontierte Baueinheit 4 ausgebildeten Schienenbaugruppe 1, ein Befestigen der Führungsschiene 2 mit einem an der Führungsschiene 2 verstellbar gelagerten Schlitten 21 in einem Fahrzeuginnenraum und ein werkzeugloses Befestigen der vormontierten Baueinheit 4 zum mindestens teilweisen Abdecken der Führungsschiene 2. Dabei erfolgt das Befestigen der vormontierten Baueinheit 4 in dem Fahrzeuginnenraum derart, dass mindestens ein Teil der vormontierten Baueinheit 4 durch Anlage an einem Schlitten 21 eine Öffnung für den Schlitten 21 freigibt.

In einer von dem dargestellten Ablauf abweichenden Ausgestaltung des Montageverfahrens kann dies weiterhin ein Befestigen von mindestens einem Verkleidungsträgersegment 3 an der Führungsschiene 2 umfassen. Weiterhin kann die Schienenabdeckung 1 an dem mindestens einen Verkleidungsträgersegment 3 festgelegt werden. Sowohl die Befestigung des mindestens ein Verkleidungsträgersegmentes 3 an der Führungsschiene 2 als auch die Befestigung der Schienenabdeckung 1 an dem mindestens einen Verkleidungsträgersegment 3 kann werkzeuglos insbesondere durch ein Verrasten der Elemente miteinander erfolgen.

In einer weiteren Ausgestaltung des vorgeschlagenen Montageverfahrens kann vor der Befestigung der Schienenabdeckung 1 an dem Verkleidungsträgersegment 3 eine Innenraumverkleidung, insbesondere ein Bodenbelag, an dem mindestens einen Verteilungsträgersegment befestigt werden. Dies ermöglicht ein Verlegen der Führungsschiene 2 unterhalb des Bodenbelages. Gleichzeitig ermöglicht das Befestigen der Schienenabdeckung 1 in einem letzten Schritt der Endmontage einen ungehinderten Zugang zur erleichterten Montage der Führungsschiene 2, der Verkleidungsträgersegmente 3 und des Bodenbelages.

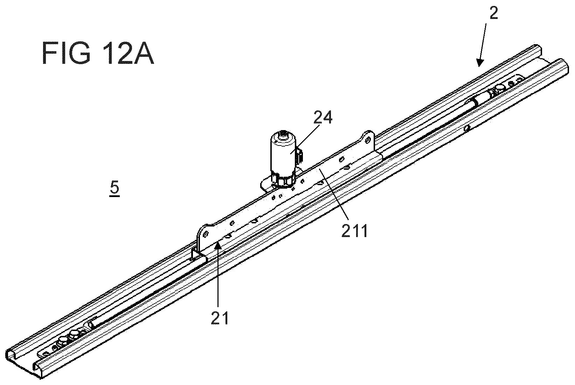

Die Figuren 12A bis 12E stellen eine Schienenbaugruppe in unterschiedlichen Montagestadien gemäß dem vorgeschlagenen Montageverfahren dar. Figur 12A zeigt die Führungsschiene 2 mit dem daran über einen Motor 24 verstellbaren Schlitten 21 in einem an einem Fahrzeugboden 5 befestigten Zustand.

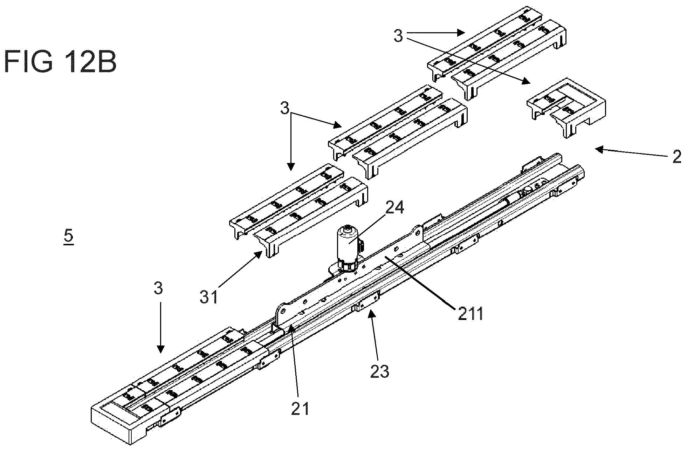

Figur 12B zeigt die Befestigung einer Mehrzahl von Verkleidungsträgersegmenten 3 an der an dem Fahrzeugboden 5 befestigten Führungsschiene 2 durch ein werkzeugloses Festlegen.

Zum werkzeuglosen Befestigen der Mehrzahl von Verkleidungsträgersegmenten 3 werden diese mit Rastnasen 31 in Rastöffnungen 23 der Führungsschiene 2 verrastet, bzw. verclipst.

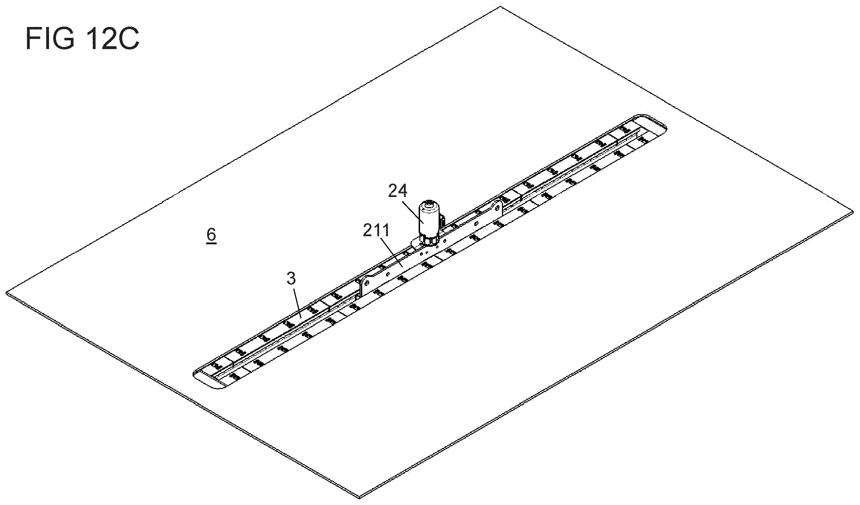

Figur 12C zeigt die vorgeschlagene Schienenbaugruppe nach einer Befestigung eines Bodenbelages 6 an den Verkleidungsträgersegmenten 3. Die Verkleidungsträgersegmente 3 definieren einen Schlitz, durch welchen sich der Schlitten 21 mit dem Kopplungsabschnitt 211 erschreckt. Der Schlitten 21 ist somit entlang des Schlitzes verstellbar. Insbesondere ist der Schlitten 21 über den Motor 24 fremdkraftbetätigt verstellbar.

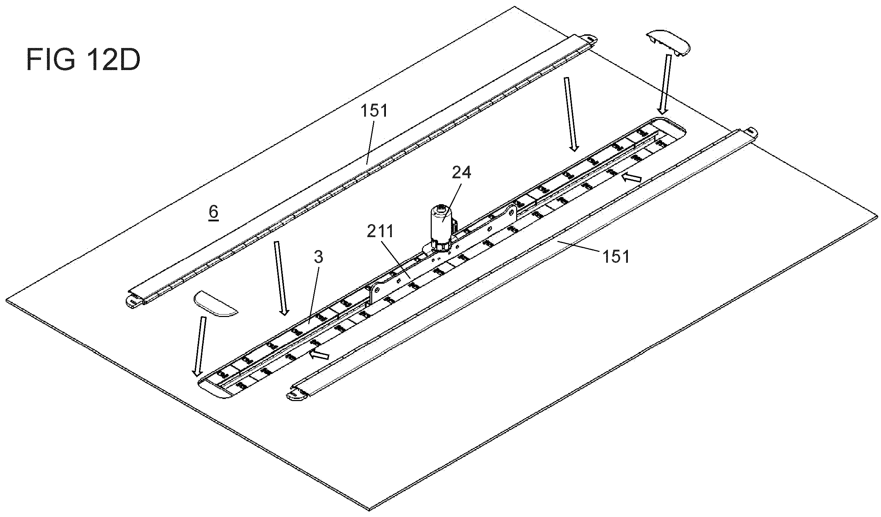

Figur 12D zeigt die Anordnung der mit zwei Gehäuseteilen 151 und zwei Endstücken ausgebildeten Schienenabdeckung 1 beidseitig des Schlittens 21 an den Verkleidungsträgersegmenten 3 entsprechend der Pfeile. Dabei gerät ein Teil der Schiebeglieder 11 beider Gehäuseteilen 151 in Anlage mit dem Schlitten 21 und wird hierdurch in die mindestens eine Verstellposition verstellt. Ebenso werden zu den anliegenden Schiebegliedern 11 benachbarte Schiebeglieder 11 aus ihrer Abdeckposition ausgelenkt. Ein weiterer Teil der Schiebeglieder 11 verbleibt in ihrer Abdeckposition und deckt somit einen Teil des von den Verkleidungsträgersegmenten 3 definierten Schlitzes über der Führungsschiene 2 ab. Durch ein Verstellen des Schlittens 21 entlang des Schlitzes sind jeweils dem Schlitten 21 benachbarte und anliegende Schiebeglieder 11 aus ihrer Abdeckposition verdrängbar. Hierdurch ist die von den aus der Abdeckposition verstellten Schiebegliedern 11 definierte Öffnung mit dem Schlitten 21 verschiebbar.

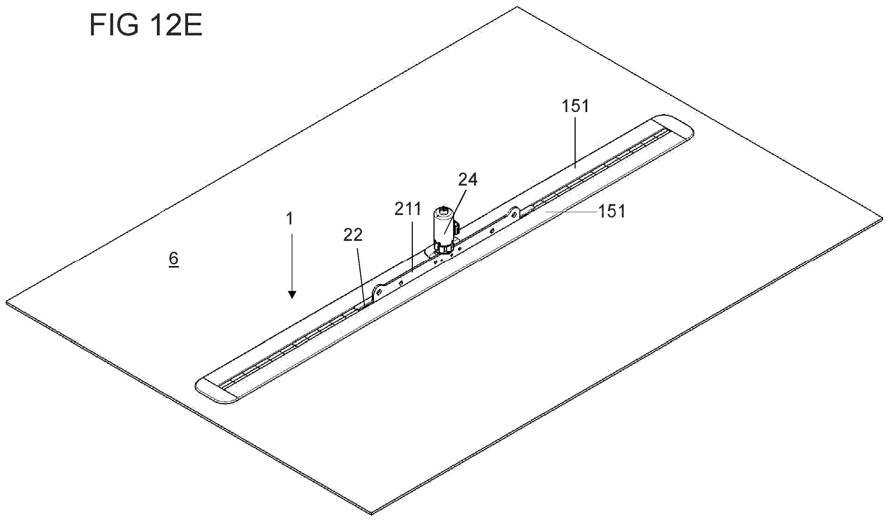

Figur 12E zeigt die fertig montierte Schienenbaugruppe mit den an den Verkleidungsträgersegmenten 3 werkzeuglos befestigten Gehäuseteilen 151 und Endstücken. Weiterhin ist an dem Schlitten 21 der Führungsschiene 2 die Blende 22 angeordnet, um die zu dem Schlitten 21 benachbarten und aus der Abdeckposition verstellten Schiebeglieder 11 gegenüber dem Fahrzeugrauminnenraum abzudecken.

### Bezugszeichenliste

- 1: Schienenabdeckung

- A1: Längserstreckungsachse
- 11: Schiebeglieder
- F11: Verstellkraft
- A11: Längsachse
- α: Kippwinkel
- 111: Befestigungsabschnitt
- 112: Stützabschnitt
- 113: Sicherungsvorsprung

- 12: Kopplungselement

- 13: Federsystem
- F13: Vorspannkraft
- A13: Erstreckungsachse
- 131: wellenförmige Blattfeder
- 132: Kraftverteilungs-Blattfeder
- 133: Vorsprung
- h: Höhe
- b: Breite

- 14: Reihe
- 15: Gehäuse
- 151: Gehäuseteil
- 16: Rastnase

- 2: Führungsschiene
- 21: Schlitten
- D21: Verstellrichtung
- 211: Kopplungsabschnitt
- 22: Blende
- 23: Rastöffnung
- 24: Motor
- 3: Verkleidungsträgersegment
- 31: Rastnase
- 32: Rastöffnung

- 4: Baueinheit

- 5: Fahrzeugboden

- 6: Bodenbelag

## Patentansprüche

1. Schienenabdeckung (1) zum mindestens teilweisen Abdecken einer Führungsschiene (2) in einem Fahrzeuginnenraum, aufweisend:
- eine Mehrzahl entlang einer Längserstreckungsachse (A1) hintereinander angeordneter Schiebeglieder (11), wobei
- jedes der Schiebeglieder (11) zwischen einer Abdeckposition und mindestens einer Verstellposition verstellbar ist,
- die Schiebeglieder (11) jeweils in ihre Abdeckposition vorgespannt sind,
- mindestens eines der Schiebeglieder (11) in der Abdeckposition zum Abdecken eines Teils der Führungsschiene (2) vorgesehen ist, und
- mindestens eines der Schiebeglieder (11) in der mindestens einen Verstellposition eine Öffnung freigibt,
**dadurch gekennzeichnet, dass**
die Schienenabdeckung (1) mindestens ein Kopplungselement (12) aufweist, das mindestens zwei der Schiebeglieder (11) verbindet und über das bei einem Verstellen eines der Schiebeglieder (11) von der Abdeckposition in die Verstellposition eine Verstellkraft (F11) in wenigstens ein weiteres Schiebeglied (11) einleitbar ist, über die das wenigstens eine weitere Schiebeglied (11) in Richtung seiner Verstellposition verstellt wird.

2. Schienenabdeckung (1) nach Anspruch 1, **dadurch gekennzeichnet, dass** das Kopplungselement (12) alle hintereinander angeordneten Schiebeglieder (11) verbindet und/oder das Kopplungselement (12) mit einem Seil ausgebildet ist.

3. Schienenabdeckung (1) nach einem der Ansprüche 1 oder 2, **dadurch gekennzeichnet, dass** die Schiebeglieder (11) eingerichtet sind, bei einem Verstellen zwischen der Abdeckposition und der mindestens einen Verstellposition relativ zu der Längserstreckungsachse (A1) zu verkippen.

4. Schienenabdeckung (1) nach einem der vorhergehenden Ansprüche, **dadurch gekennzeichnet, dass** eine Verstellbewegung, mit der die Schiebeglieder (11) zwischen der Abdeckposition und der mindestens einen Verstellposition verstellbar sind, eine Richtungskomponente senkrecht zu der Längserstreckungsachse (A1) aufweist.

5. Schienenabdeckung (1) nach einem der vorhergehenden Ansprüche, **dadurch gekennzeichnet, dass** mindestens zwei der Schiebeglieder (11) über eine Vorspannkraft (F13) in ihre jeweilige Abdeckposition vorgespannt sind, die von einer wellenförmigen Blattfeder der Schienenabdeckung (1) aufgebracht ist, insbesondere wobei die Schienenabdeckung (1), zum Verteilen der durch die wellenförmige Blattfeder (131) aufgebrachten Vorspannkraft (F13) auf die mindestens zwei Schiebeglieder (11), eine Kraftverteilungs-Blattfeder (132) aufweist, insbesondere wobei sich die wellenförmige Blattfeder (131) an einem Bauteil, relativ zu dem die Schiebeglieder (11) verstellbar sind, an der Kraftverteilungs-Blattfeder (132) abstützt.

6. Schienenabdeckung (1) nach einem der vorhergehenden Ansprüche, **dadurch gekennzeichnet, dass** mindestens eines der Schiebeglieder (11) einen Sicherungsvorsprung (113) aufweist, der ein Verstellen des mindestens einen Schiebegliedes (11) relativ zu einem Bauteil, relativ zu dem die Schiebeglieder (11) verstellbar sind, begrenzt.

7. Schienenabdeckung (1) nach einem der vorhergehenden Ansprüche, **dadurch gekennzeichnet, dass** die Schienenabdeckung (1) mehrere Reihen von jeweils entlang einer Längserstreckungsachse (A1) hintereinander angeordneten Schiebegliedern (11) aufweist, insbesondere wobei mindestens zwei der mehreren Reihen hintereinander angeordnet sind und/oder zwei der mehreren Reihen jeweils entlang der Längserstreckungsachse (A1) verlaufend einander gegenüberliegend angeordnet sind.

8. Schienenabdeckung (1) nach einem der vorhergehenden Ansprüche, **dadurch gekennzeichnet, dass** die Schienenabdeckung (1) ein Gehäuse (15) aufweist, an dem die Schiebeglieder (11) verstellbar gelagert sind.

9. Schienenabdeckung (1) nach Anspruch 7 und nach Anspruch 8, **dadurch gekennzeichnet, dass** das Gehäuse (15) mit mehreren Gehäuseteilen (151) ausgebildet ist, an denen jeweils eine der mehreren Reihen gelagert ist.

10. Schienenbaugruppe, aufweisend eine Führungsschiene (2) zum Lagern einer Innenraumkomponente in einem Fahrzeuginnenraum mit einem an der Führungsschiene (2) verstellbar gelagerten Schlitten (21) und eine mit der Führungsschiene (2) verbundene Schienenabdeckung (1) nach einem der vorhergehenden Ansprüche, wobei sich der Schlitten (21) durch die Öffnung der Schienenabdeckung (1) erstreckt.

11. Schienenbaugruppe nach Anspruch 10, **dadurch gekennzeichnet, dass** der Schlitten (21), zum Einleiten der Verstellkraft (F11) in einen Teil der Schiebeglieder (11), an mindestens einem Schiebeglied (11) anliegt, insbesondere wobei der Schlitten (21), zum Abdecken von aus der Abdeckposition verstellter Schiebeglieder (11), eine Blende (22) aufweist.

12. Schienenbaugruppe nach Anspruch 10 oder 11, **dadurch gekennzeichnet, dass** die Schienenbaugruppe mindestens ein mit der Führungsschiene (2) verbundenes Verkleidungsträgersegment (3), zur Verbindung der Schienenbaugruppe mit einer Innenraumverkleidung, aufweist, insbesondere wobei, zur werkzeuglosen Montage, das mindestens eine Verkleidungsträgersegment (3) mit der Führungsschiene (2) verrastet ist, insbesondere wobei das mindestens eine Verkleidungsträgersegment (3) mit einer Mehrzahl von Rastnasen (16) in eine Mehrzahl von Rastöffnungen (23) der Führungsschiene (2) greift.

13. Schienenabdeckung (1) nach einem der Ansprüche 1 bis 9 **dadurch gekennzeichnet, dass** die Schienenabdeckung (1) als vormontierte und an die Führungsschiene (2) montierbare Baueinheit (4) mit einem Gehäuseteil (15) ausgebildet ist, an dem das mindestens eine Schiebeglied (11) verstellbar gelagert ist, wobei die vormontierte Baueinheit (4) insbesondere werkzeuglos an die Führungsschiene (2) montierbar ist.

14. Montageverfahren zur Montage einer Schienenbaugruppe nach einem der Ansprüche 10 bis 12, umfassend:
- Bereitstellen einer Schienenabdeckung (1) der Schienenbaugruppe zum mindestens teilweisen Abdecken einer Führungsschiene (2) in einem Fahrzeuginnenraum als vormontierte Baueinheit (4),
- Befestigen einer Führungsschiene (2) der Schienenbaugruppe mit einem an der Führungsschiene (2) verstellbar gelagerten Schlitten (21) in einem Fahrzeuginnenraum, und
- werkzeugloses Befestigen der vormontierten Baueinheit (4), in dem Fahrzeuginnenraum, wobei mindestens ein Teil der vormontierten Baueinheit (4) durch Anlage an dem Schlitten (21) eine Öffnung für den Schlitten (21) freigibt.

## Claims

1. A rail cover (1) for at least partly covering a guide rail (2) in a vehicle interior space, comprising:
- a plurality of sliding members (11) arranged one behind the other along an axis of longitudinal extension (A1), wherein
- each of the sliding members (11) can be adjusted between a covering position and at least one adjusting position,
- the sliding members (11) each are pretensioned into their covering position,
- at least one of the sliding members (11) in the covering position is provided for covering a part of the guide rail (2), and
- at least one of the sliding members (11) clears an opening in the at least one adjusting position,
**characterized in that**
the rail cover (1) includes at least one coupling element (12), which connects at least two of the sliding members (11) and via which on adjustment of one of the sliding members (11) from the covering position into the adjusting position an adjusting force (F11) can be introduced into at least one further sliding member (11), via which the at least one further sliding member (11) is adjusted in the direction of its adjusting position.

2. The rail cover (1) according to claim 1, **characterized in that** the coupling element (12) connects all sliding members (11) arranged one behind the other and/or the coupling element (12) is configured with a rope.

3. The rail cover (1) according to any of claims 1 or 2, **characterized in that** the sliding members (11) are adapted to tilt relative to the axis of longitudinal extension (A1) on adjustment between the covering position and the at least one adjusting position.

4. The rail cover (1) according to any of the preceding claims, **characterized in that** an adjusting movement, with which the sliding members (11) can be adjusted between the covering position and the at least one adjusting position, has a directional component perpendicular to the axis of longitudinal extension (A1).

5. The rail cover (1) according to any of the preceding claims, **characterized in that** at least two of the sliding members (11) are pretensioned into their respective covering position via a pretensioning force (F13), which is applied by a wave-shaped leaf spring of the rail cover (1), in particular wherein the rail cover (1) includes a force distribution leaf spring (132) for distributing the pretensioning force (F13) applied by the wave-shaped leaf spring (131) onto the at least two sliding members (11), in particular wherein the wave-shaped leaf spring (131) supports on the force distribution leaf spring (132) on a component relative to which the sliding members (11) can be adjusted.

6. The rail cover (1) according to any of the preceding claims, **characterized in that** at least one of the sliding members (11) has a securing protrusion (113) which limits an adjustment of the at least one sliding member (11) relative to a component relative to which the sliding members (11) can be adjusted.

7. The rail cover (1) according to any of the preceding claims, **characterized in that** the rail cover (1) includes several rows of sliding members (11) each arranged one behind the other along an axis of longitudinal extension (A1), in particular wherein at least two of the several rows are arranged one behind the other and/or two of the several rows each are arranged opposite each other and extend along the axis of longitudinal extension (A1).

8. The rail cover (1) according to any of the preceding claims, **characterized in that** the rail cover (1) includes a housing (15) on which the sliding members (11) are adjustably mounted.

9. The rail cover (1) according to claim 7 and according to claim 8, **characterized in that** the housing (15) is formed with several housing parts (151) on each of which one of the several rows is mounted.

10. A rail assembly, comprising a guide rail (2) for mounting an interior component in a vehicle interior space with a carriage (21) adjustably mounted on the guide rail (2) and a rail cover (1) connected to the guide rail (2) according to any of the preceding claims, wherein the carriage (21) extends through the opening of the rail cover (1).

11. The rail assembly according to claim 10, **characterized in that** the carriage (21), for introducing the adjusting force (F11) into a part of the sliding members (11), rests against at least one sliding member (11), in particular wherein the carriage (21) includes a cover (22) for covering sliding members (11) adjusted out of the covering position.

12. The rail assembly according to claim 10 or 11, **characterized in that** the rail assembly includes at least one trim carrier segment (3) connected to the guide rail (2), for connection of the rail assembly to an interior trim, in particular wherein, for the tool-free assembly, the at least one trim carrier segment (3) is latched with the guide rail (2), in particular wherein the at least one trim carrier segment (3) engages into a plurality of latching openings (23) of the guide rail (2) with a plurality of latching noses (16).

13. The rail cover (1) according to any of claims 1 to 9, **characterized in that** the rail cover (1) is configured as a pre-mounted construction unit (4) to be mounted to the guide rail (2) with a housing part (15) on which the at least one sliding member (11) is adjustably mounted, wherein the pre-mounted construction unit (4) can be mounted to the guide rail (2) in particular in a tool-free way.

14. A mounting method for mounting a rail assembly according to any of claims 10 to 12, comprising:
- providing a rail cover (1) of the rail assembly for at least partly covering a guide rail (2) in a vehicle interior space as a pre-mounted construction unit (4),
- fastening a guide rail (2) of the rail assembly with a carriage (21) adjustably mounted on the guide rail (2) in a vehicle interior space, and
- tool-free fastening of the pre-mounted construction unit (4) in the vehicle interior space, wherein at least part of the pre-mounted construction unit (4) clears an opening for the carriage (21) by resting against the carriage (21).

## Revendications

1. Recouvrement de rail (1) pour recouvrir au moins partiellement un rail de guidage (2) dans un habitacle de véhicule, présentant :
- une pluralité d'éléments coulissants (11) agencés les uns derrière les autres le long d'un axe d'extension longitudinal (A1), dans lequel
- chacun des éléments coulissants (11) est réglable entre une position de recouvrement et au moins une position de réglage,
- les éléments coulissants (11) sont respectivement précontraints dans leur position de recouvrement,
- au moins un des éléments coulissants (11) est prévu dans la position de recouvrement pour recouvrir une partie du rail de guidage (2), et
- au moins un des éléments coulissants (11) libère une ouverture dans la au moins une position de réglage,
**caractérisé en ce que**
le recouvrement de rail (1) présente au moins un élément de couplage (12) qui relie au moins deux des éléments coulissants (11) et par l'intermédiaire duquel, lors d'un déplacement de l'un des éléments coulissants (11) de la position de recouvrement à la position de réglage, une force de réglage (F11) peut être introduite dans au moins un autre élément coulissant (11), par l'intermédiaire de laquelle ledit au moins un autre élément coulissant (11) est déplacé en direction de sa position de réglage.

2. Recouvrement de rail (1) selon la revendication 1, **caractérisé en ce que** l'élément de couplage (12) relie tous les éléments coulissants (11) agencés les uns derrière les autres et/ou l'élément de couplage (12) est réalisé avec un câble.

3. Recouvrement de rail (1) selon l'une quelconque des revendications 1 ou 2, **caractérisé en ce que** les éléments coulissants (11) sont adaptés pour basculer par rapport à l'axe d'extension longitudinal (A1) lors d'un déplacement entre la position de recouvrement et ladite au moins une position de réglage.

4. Recouvrement de rail (1) selon l'une quelconque des revendications précédentes, **caractérisé en ce qu'**un mouvement de réglage, avec lequel les éléments coulissants (11) sont réglables entre la position de recouvrement et la au moins une position de réglage, présente une composante directionnelle perpendiculaire à l'axe d'extension longitudinale (A1).

5. Recouvrement de rail (1) selon l'une quelconque des revendications précédentes, **caractérisé en ce qu'**au moins deux des éléments coulissants (11) sont précontraints dans leur position de recouvrement respective par une force de précontrainte (F13) qui est appliquée par un ressort à lame ondulé du recouvrement de rail (1), en particulier dans laquelle le recouvrement de rail (1), pour répartir la force de précontrainte (F13) appliquée par le ressort à lame ondulé (131) sur les au moins deux éléments coulissants (11), présente un ressort à lame de répartition de force (132), en particulier dans lequel le ressort à lame ondulé (131) s'appuie sur le ressort à lame de répartition de force (132) sur un composant par rapport auquel les éléments coulissants (11) sont réglables.

6. Recouvrement de rail (1) selon l'une quelconque des revendications précédentes, **caractérisé en ce qu'**au moins l'un des éléments coulissants (11) présente une saillie de sécurité (113) qui limite un déplacement dudit au moins un élément coulissant (11) par rapport à un composant par rapport auquel les éléments coulissants (11) sont réglables.

7. Recouvrement de rail (1) selon l'une quelconque des revendications précédentes, **caractérisé en ce que** le recouvrement de rail (1) présente plusieurs rangées d'éléments coulissants (11) agencés respectivement les uns derrière les autres le long d'un axe d'extension longitudinal (A1), en particulier où au moins deux des plusieurs rangées sont agencées les unes derrière les autres et/ou deux des plusieurs rangées sont agencées respectivement en face les unes des autres le long de l'axe d'extension longitudinal (A1).

8. Recouvrement de rail (1) selon l'une quelconque des revendications précédentes, **caractérisé en ce que** le recouvrement de rail (1) présente un boîtier (15) sur lequel les éléments coulissants (11) sont montés de manière réglable.

9. Recouvrement de rail (1) selon la revendication 7 et selon la revendication 8, **caractérisé en ce que** le boîtier (15) est réalisé avec plusieurs parties de boîtier (151) sur chacune desquelles est montée l'une des plusieurs rangées.

10. Ensemble de rails, comprenant un rail de guidage (2) pour supporter un composant intérieur dans un habitacle de véhicule avec un chariot (21) monté de manière réglable sur le rail de guidage (2) et un recouvrement de rail (1) relié au rail de guidage (2) selon l'une quelconque des revendications précédentes, le chariot (21) s'étendant à travers l'ouverture du recouvrement de rail (1).

11. Ensemble de rails selon la revendication 10, **caractérisé en ce que** le chariot (21), pour introduire la force de réglage (F11) dans une partie des éléments coulissants (11), est en appui contre au moins un élément coulissant (11), le chariot (21) comportant en particulier un cache (22) pour recouvrir les éléments coulissants (11) déplacés hors de la position de recouvrement.

12. Ensemble de rails selon la revendication 10 ou 11, **caractérisé en ce que** l'ensemble de rails présente au moins un segment de support de revêtement (3) relié au rail de guidage (2), pour la liaison de l'ensemble de rails avec un revêtement d'habitacle, en particulier où, pour un montage sans outil, l'au moins un segment de support de revêtement (3) est enclenché avec le rail de guidage (2), en particulier l'au moins un segment de support de revêtement (3) s'engageant avec une pluralité de nez d'enclenchement (16) dans une pluralité d'ouvertures d'enclenchement (23) du rail de guidage (2).

13. Recouvrement de rail (1) selon l'une quelconque des revendications 1 à 9 **caractérisé en ce que** le recouvrement de rail (1) est réalisé sous forme d'unité de construction (4) prémontée et pouvant être montée sur le rail de guidage (2) avec une partie de boîtier (15) sur laquelle le au moins un élément coulissant (11) est supporté de manière réglable, l'unité de construction prémontée (4) pouvant être montée en particulier sans outil sur le rail de guidage (2).

14. Procédé d'assemblage pour assembler un ensemble de rails selon l'une quelconque des revendications 10 à 12, comprenant :
- prévoir un recouvrement de rail (1) de l'ensemble de rails pour le recouvrement au moins partiel d'un rail de guidage (2) dans un habitacle de véhicule en tant qu'unité de construction prémontée (4),
- fixer un rail de guidage (2) de l'ensemble de rails avec un chariot (21) monté de manière réglable sur le rail de guidage (2) dans un habitacle de véhicule, et
- fixer sans outil l'unité de construction prémontée (4), dans l'habitacle de véhicule, au moins une partie de l'unité de construction prémontée (4) libérant une ouverture pour le chariot (21) par appui sur le chariot (21).
